# EUROPEAN PATENT SPECIFICATION

(11) **EP 2 714 442 B1**
(45) Date of publication and mention of the grant of the patent: **22.10.2014**
(21) Application number: 12726856.3
(22) Date of filing: 22.05.2012
(51) Int. Cl.: B60H 1/32, B60H 1/00

(54) **COOLING SYSTEM AND VEHICLE**
KÜHLSYSTEM UND FAHRZEUG
SYSTÈME DE REFROIDISSEMENT ET VÉHICULE

(30) Priority: 26.05.2011 JP 2011118278
(43) Date of publication of application: 09.04.2014
(73) Proprietor: TOYOTA JIDOSHA KABUSHIKI KAISHA, Toyota-shi, Aichi-ken, 471-8571 (JP)
(72) Inventor: OHNO, Yuichi, Nishio, Aichi 445-0012 (JP); UCHIDA, Kazuhide, Nishio, Aichi 445-0012 (JP); JOJIMA, Yuki, Toyota-shi, Aichi-ken, 471-8571 (JP); KAWAKAMI, Yoshiaki, Toyota-shi, Aichi-ken, 471-8571 (JP); TAKAHASHI, Eizo, Toyota-shi, Aichi-ken, 471-8571 (JP); SATO, Kousuke, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/IB2012/000990
(87) International publication number: WO 2012/160434

(56) References cited:
- EP-A1- 2 072 296
- EP-A1- 2 305 497
- WO-A1-2009/127292
- US-A1- 2003 159 455

## Description

### BACKGROUND OF THE INVENTION

### 1. Field of the Invention

The invention relates to a cooling system and a vehicle, and more particularly to a cooling system that cools a heat-generating source by using a vapor compression refrigeration cycle and a vehicle including the cooling system.

### 2. Description of Related Art

In recent years, hybrid vehicles, fuel cell vehicles, and electric automobiles that are driven by a power of a motor have attracted attention as a means for resolving environmental problems. In such vehicles, electric devices such as motors, generators, inverters, converters, and batteries generate heat when electric power is received or released. Therefore, those electric devices should be cooled. Accordingly, a technique for cooling a heat-generating body by using a vapor compression refrigeration cycle used as an air conditioning device for a vehicle has been suggested.

For example, Japanese Patent Application Publication No. 2006-290254 (JP 2006-290254 A) discloses a cooling system for a hybrid vehicle including a compressor that can take in and compress a gaseous refrigerant, a main condenser in which the high-pressure gaseous refrigerant is cooled by the surrounding air for condensing, an evaporator in which the object to be cooled is cooled by evaporating the low-temperature liquid refrigerant, and a decompression means, wherein a heat exchanger capable of absorbing heat from the motor and a second decompression means are connected in parallel with the decompression means and the evaporator. Japanese Patent Application Publication No. 2007-69733 (JP 2007-69733 A) discloses a system in which a heat exchanger that performs heat exchange with the air for air conditioning and a heat exchanger that performs heat exchange with a heat-generating body are disposed in parallel in a refrigerant passage from an expansion valve to a compressor, and the heat-generating body is cooled by using the refrigerant for an air conditioner.

Japanese Patent Application Publication No. 2005-90862 (JP 2005-90862 A) discloses a cooling system in which a heat-generating body cooling unit for cooling a heat-generating body is provided in a bypass passage that bypasses a decompressor, an evaporator, and a compressor of a refrigeration cycle for air conditioning. Japanese Patent Application Publication No. 2001-309506 (JP 2001-309506 A) discloses a cooling system in which a refrigerant of a refrigeration cycle apparatus for air conditioning in a vehicle is circulated to a cooling member of an inverter circuit unit that drive-controls a vehicle motor, and the cooling of the air-conditioning air flow with the evaporator of the refrigeration cycle apparatus for air conditioning in a vehicle is suppressed when the cooling of the air-conditioning air flow is unnecessary.

In the cooling apparatus disclosed in the JP 2006-290254 A, the compressor should be operated at all times in order to cool a heat-generating source such as an electric device represented by a motor, a direct current/direct current (DC/DC) converter, and an inverter. A resultant problem is that power consumed by the compressor is increased and fuel efficiency of the vehicle is therefore degraded. Further, since the heat exchanger that performs heat exchange with the heat-generating source is connected in parallel to the evaporator, a resultant problem is that the refrigerant for cooling the heat-generating source is not used for cooling the vehicle cabin and the cooling capacity is therefore impaired.
Document EP 2 305 497, which is considered as the closest prior art, discloses a cooling system comprising a compressor, a first heat exchanger performing heat exchange between the refrigerant and external air, a decompressor that decompresses the refrigerant, a second heat exchanger performing heat exchange between the refrigerant and air for air conditioning, piping connecting the compressor, the first heat exchanger, the decompressor, the second heat exchanger in this order, and a cooling unit cooling a heat-generating source by using the refrigerant.

### SUMMARY OF THE INVENTION

The invention provides a cooling system that can cool a heat-generating source reliably, while ensuring air conditioning capacity in a vehicle cabin, and at the same time can reduce power consumption of the compressor. The invention also provides a vehicle including the cooling system.

A cooling system in accordance with a first aspect of the invention includes: a compressor for circulating a refrigerant; a first heat exchanger that performs heat exchange between the refrigerant and external air; a decompressor that decompresses the refrigerant; a second heat exchanger that performs heat exchange between the refrigerant and air for air conditioning; piping that connects the compressor, the first heat exchanger, the decompressor, the second heat exchanger, and the compressor in this order and that allows the refrigerant to flow so as to circulate therethrough; a cooling unit that is provided in the piping at a portion of the piping between the first heat exchanger and the decompressor and that cools a heat-generating source by using the refrigerant; and a connection passage that communicates a first passage with a second passage, the first passage being a portion of the piping between the compressor and the first heat exchanger, the second passage being a portion of the piping between the cooling unit and the decompressor, wherein the first heat exchanger is positioned higher than the cooling unit, and the piping is arranged so that the refrigerant that is condensed by the first heat exchanger is caused to flow into the cooling unit by gravitational force.

In the above first aspect of the invention, the cooling system may further include a liquid storage device that is provided in the piping at a portion of the piping between the first heat exchanger and the cooling unit and stores the refrigerant that is in a liquid state, the liquid storage device being positioned higher than the cooling unit.

In the above first aspect of the invention, the cooling system may further include a control section that controls the cooling system, the control section including a compressor control section that controls start and stop of the compressor, wherein the compressor control section is configured to start and stop the compressor according to an external input.

In the above first aspect of the invention, the cooling system may further include an operation input section that receives an operation from outside, wherein the compressor control section is configured to start and stop the compressor according to a command from the operation input section.

In the above first aspect of the invention, the cooling system may further include an external air temperature measurement section that measures a temperature of the external air, wherein the compressor control section is configured to start and stop the compressor on the basis of the temperature measured by the external air temperature measurement section.

In the above first aspect of the invention, the cooling system may further include an air-conditioning air temperature measurement section that measures a temperature of the air for air conditioning, wherein the compressor control section is configured to start and stop the compressor on the basis of the temperature measured by the air-conditioning air temperature measurement section.

In the above first aspect of the invention, the cooling system may further include: a liquid storage device that is provided in the piping at a portion of the piping between the first heat exchanger and the cooling unit and stores the refrigerant that is in a liquid state, the liquid storage device being positioned higher than the cooling unit; and a refrigerant amount measurement section that measures an amount of the refrigerant stored inside the liquid storage device, wherein the compressor control section is configured to start and stop the compressor on the basis of the amount of refrigerant measured by the refrigerant amount measurement section.

In the above first aspect of the invention, the cooling system may further include: a cooling unit inlet temperature measurement section that measures a temperature of the refrigerant flowing into the cooling unit; and a cooling unit outlet temperature measurement section that measures a temperature of the refrigerant flowing out of the cooling unit, wherein the compressor control section is configured to start and stop the compressor on the basis of the temperatures measured by the cooling unit inlet temperature measurement section and the cooling unit outlet temperature measurement section.

In the above first aspect of the invention, the cooling system may further include a connection passage switching valve that can be opened and closed and is provided in the connection passage, wherein the control section further has a switching valve control section that is configured to control an open-closed state of the connection passage switching valve, and the switching valve control section is configured to set the connection passage switching valve to a closed state or open state according to a command for causing the compressor control section to start or stop the compressor.

In the above first aspect of the invention, the cooling system may further include a second passage switching valve that can be opened and closed and is provided in the second passage on a side closer to the decompressor with respect to a connection between the connection passage and the second passage, wherein the switching valve control section is further configured to control an open-closed state of the second passage switching valve, and the switching valve control section is configured to set the second passage switching valve to a closed state or open state according to a command for causing the compressor control section to start or stop the compressor.

In the above first aspect of the invention, the cooling system may further include a three-way valve that is provided at a connection between the connection passage and the second passage, wherein the control section further includes a switching valve control section that is configured to control a state of the three-way valve, and the switching valve control section is configured to set the three-way valve to a first state or a second state according to a command for causing the compressor control section to start or stop the compressor, the first state being a state, in which the second passage on a side closer to the cooling unit with respect to the connection and the second passage on a side closer to the decompressor with respect to the connection are communicated with each other, the second state being a state, in which the second passage on the side closer to the cooling unit with respect to the connection and the connection passage are communicated with each other.

A vehicle in accordance with a second aspect of the invention includes: the cooling system in accordance with the first aspect; an engine; and an engine control unit that controls the engine, wherein the compressor control section is configured to start and stop the compressor according to a command from the engine control unit.

According to the invention, it is possible to reliably cool the heat-generating source, while ensuring air conditioning capacity in the vehicle cabin, and it is possible to reduce power consumption of the compressor.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating a configuration of a hybrid vehicle using a cooling system;
FIG. 2 is a schematic diagram illustrating a configuration of a cooling system of a first embodiment;
FIG. 3 is a schematic diagram illustrating a schematic configuration of a gas-liquid separator;
FIG. 4 is a Mollier diagram illustrating the state of the refrigerant in a vapor compression refrigeration cycle of the first embodiment;
FIG. 5 is a schematic diagram illustrating the flow of the refrigerant that cools a hybrid vehicle (HV) device when the vapor compression refrigeration cycle operates;
FIG. 6 is a schematic diagram illustrating the flow of the refrigerant that cools the HV device when the vapor compression refrigeration cycle is stopped;
FIG. 7 shows the opening degrees of a flow rate adjustment valve and switching valves for each operation mode of the cooling system;
FIG. 8 is a block diagram illustrating specific details of a configuration of a control section;
FIG. 9 is a flowchart illustrating an example of a control method for the cooling system;
FIG. 10 is a schematic diagram illustrating a configuration of a cooling system of a second embodiment;
FIG. 11 is a block diagram illustrating in detail a configuration of a control section according to the second embodiment; and
FIG. 12 is a flowchart illustrating a method for controlling the cooling system of the second embodiment.

### DETAILED DESCRIPTION OF EMBODIMENTS

The embodiments of the invention will be described below with reference to the appended drawings. In the figures, same or corresponding components are assigned with same reference numerals and the redundant explanation thereof is omitted.

### (First Embodiment)

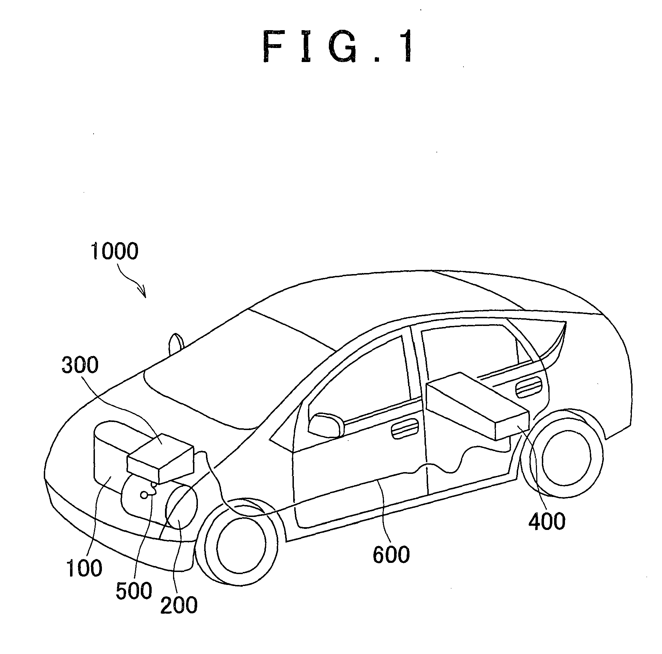

FIG. 1 is a schematic diagram illustrating a configuration of a hybrid vehicle 1000 using the cooling system 1 of the embodiment. As shown in FIG. 1, the hybrid vehicle 1000 according to the embodiment includes an engine 100, a drive unit 200, a power control unit (PCU) 300, and a battery 400. The drive unit 200 is electrically connected by a cable 500 to the PCU 300. The PCU 300 is electrically connected by a cable 600 to the battery 400.

The engine 100, which is an internal combustion engine, may be a gasoline engine or a diesel engine. The drive unit 200 generates drive power for driving the engine 100 and the hybrid vehicle 1000. The engine 100 and the drive unit 200 are provided inside an engine room of the hybrid vehicle 1000.

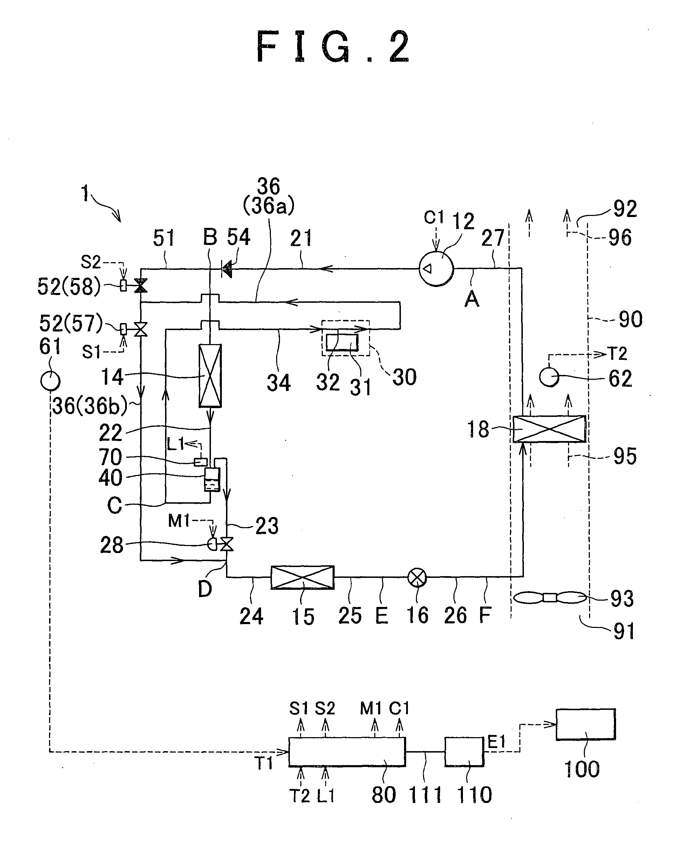

FIG. 2 is a schematic diagram illustrating a configuration of the cooling system 1 of the first embodiment. The cooling system 1 includes a vapor compression refrigeration cycle as shown in FIG. 2. The vapor compression refrigeration cycle is provided at the vehicle, for example, for cooling the interior of the vehicle cabin. Cooling that uses the vapor compression refrigeration cycle is performed, for example, when a switch for performing the cooling is turned on, or when an automatic control mode is selected for automatically adjusting the temperature inside the vehicle cabin to a preset temperature and the temperature inside the vehicle cabin is higher than the preset temperature.

The vapor compression refrigeration cycle includes a compressor 12, a heat exchanger 14 as a first heat exchanger, a heat exchanger 15, an expansion valve 16 as an example of a depressurization device, and a heat exchanger 18 as a second heat exchanger. The vapor compression refrigeration cycle also includes a gas-liquid separator 40 disposed in a refrigerant path between the heat exchanger 14 and the heat exchanger 15.

The compressor 12 actuates a motor or an engine installed on the vehicle as a power source, adiabatically compresses the refrigerant gas and obtains a superheated refrigerant gas. The compressor 12 sucks in and compresses the refrigerant circulating from the heat exchanger 18 when the vapor compression refrigeration cycle is actuated and discharges the high-temperature and high-pressure gas-phase refrigerant to a refrigerant passage 21. By discharging the refrigerant to the refrigerant passage 21, the compressor 12 circulates the refrigerant in the vapor compression refrigeration cycle.

The heat exchangers 14, 15 isobarically release the heat of the superheated refrigerant gas that has been compressed by the compressor, to an external medium to obtain a refrigerant liquid. The high-pressure gas-phase refrigerant discharged from the compressor 12 is condensed (liquefied) by cooling due to heat release to the environment in the heat exchangers 14, 15. The heat exchangers 14, 15 include tubes through which the refrigerant circulates and fins for performing heat exchange between the refrigerant circulating inside the tubes with the air surrounding the heat exchangers 14, 15. The heat exchangers 14, 15 perform heat exchange between the refrigerant and a cooling air supplied by natural draft generated by the movement of the vehicle or forced draft from the cooling fan such as a radiator fan for engine cooling. As a result of the heat exchange in the heat exchangers 14, 15, the refrigerant temperature decreases and the refrigerant is liquefied.

The expansion valve 16 expands the high-pressure liquid-phase refrigerant circulating in the refrigerant passage 25 by jetting out the refrigerant from a small hole and converts the refrigerant into a low-temperature and low-pressure mist-like refrigerant. The expansion valve 16 depressurizes the refrigerant liquid condensed by the heat exchangers 14, 15 and produces wet vapor in a gas-liquid mixed state. A depressurization device for depressurizing the refrigerant liquid is not limited to the expansion valve 16, which performs throttle expansion, and may be a capillary tube.

The heat exchanger 18 absorbs heat of the surrounding air introduced so as to come into contact with the heat exchanger 18 by vaporization of the mist-like refrigerant circulating therein. By using the refrigerant depressurized by the expansion valve 16, the heat exchanger 18 absorbs from the air-conditioning air that circulates into the vehicle cabin the heat of vaporization, which is generated when the wet vapor of the refrigerant evaporates and becomes refrigerant gas, thereby cooling the inside of the vehicle cabin. The air-conditioning air that has a temperature lowered due to the absorption of heat by the heat exchanger 18 again returns into the vehicle cabin, thereby cooling the inside of the vehicle cabin. The refrigerant is heated by heat absorption from the environment in the heat exchanger 18.

The heat exchanger 18 includes a tube in which the refrigerant circulates and fins for performing heat exchange between the refrigerant circulating inside the tube and the air surrounding the heat exchanger 18. The refrigerant in a state of wet vapor circulates inside the tube. When the refrigerant circulates inside the tube, the refrigerant is evaporated by absorption of heat of the air inside the vehicle cabin as latent heat of evaporation via the fins and then becomes superheated vapor under the effect of sensible heat. The vaporized refrigerant circulates through the refrigerant passage 27 into the compressor 12. The compressor 12 compresses the refrigerant that circulates from the heat exchanger 18.

The vapor compression refrigeration cycle further includes a refrigerant passage 21 as a first passage communicating the compressor 12 with the heat exchanger 14, refrigerant passages 22, 23, 24 communicating the heat exchanger 14 with the heat exchanger 15, a refrigerant passage 25 communicating the heat exchanger 15 with the expansion valve 16, a refrigerant passage 26 communicating the expansion valve 16 with the heat exchanger 18, and a refrigerant passage 27 communicating the heat exchanger 18 with the compressor 12.

The refrigerant passage 21 is a passage for circulating the refrigerant from the compressor 12 to the heat exchanger 14. The refrigerant circulates in the refrigerant passage 21 between the compressor 12 and the heat exchanger 14 from an outlet of the compressor 12 toward the inlet of the heat exchanger 14. The refrigerant passages 22 to 25 circulate the refrigerant from the heat exchanger 14 to the expansion valve 16. The refrigerant circulates in the refrigerant passages 22 to 25 between the heat exchanger 14 and the expansion valve 16 from the outlet of the heat exchanger 14 toward the inlet of the expansion valve 16.

The refrigerant passage 26 is a passage for circulating the refrigerant from the expansion valve 16 to the heat exchanger 18. The refrigerant circulates in the refrigerant passage 26 between the expansion valve 16 and the heat exchanger 18 from the outlet of the expansion valve 16 to the inlet of the heat exchanger 18. The refrigerant passage 27 is a passage for circulating the refrigerant from the heat exchanger 18 to the compressor 12. The refrigerant circulates in the refrigerant passage 27 between the heat exchanger 18 and the compressor 12 from the outlet of the heat exchanger 18 to the inlet of the compressor 12.

The vapor compression refrigeration cycle is constituted by connecting the compressor 12, heat exchangers 14, 15, expansion valve 16, and heat exchanger 18 by the refrigerant passages 21 to 27. Examples of refrigerants that can be used in the vapor compression refrigeration cycle include carbon dioxide, hydrocarbons such as propane and isobutane, ammonia, and water.

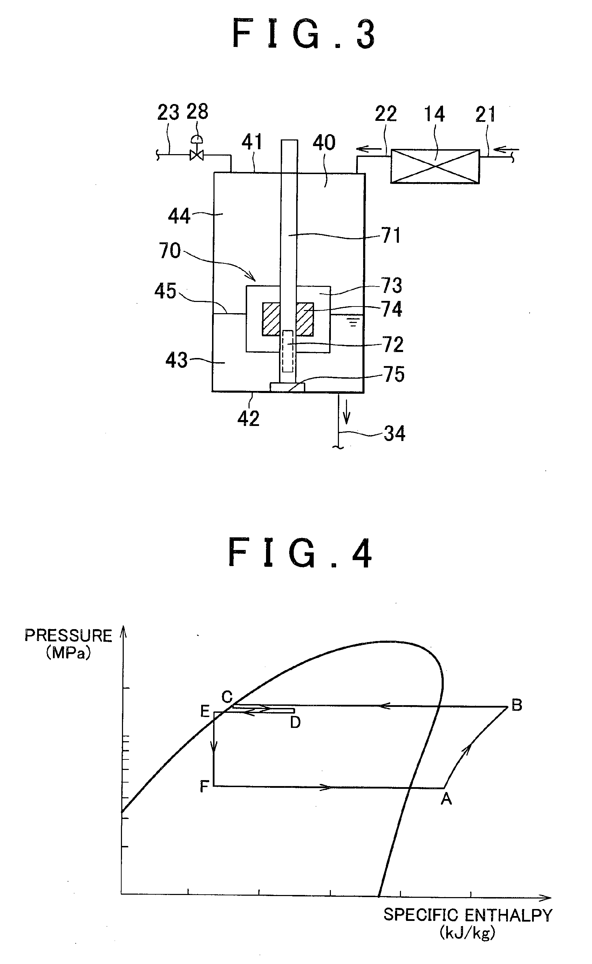

The gas-liquid separator 40 separates the refrigerant flowing from the heat exchanger 14 into a gas-phase refrigerant and a liquid-phase refrigerant. FIG. 3 is a schematic diagram illustrating a schematic configuration of the gas-liquid separator 40. As shown in FIG. 3, the gas-liquid separator 40 has a top portion 41 and a bottom portion 42. A refrigerant liquid 43, which is the liquid-phase refrigerant, and a refrigerant vapor 44, which is the gas-phase refrigerant, are accumulated inside the gas-liquid separator 40. The refrigerant liquid 43 is stored in the bottom portion 42 side of the gas-liquid separator 40, and the refrigerant vapor 44 is stored in the top portion 41 side of the gas-liquid separator 40.

The refrigerant passages 22, 23 and the refrigerant passage 34 are connected to the gas-liquid separator 40. The end portions of the refrigerant passages 22, 23 are connected to the top portion 41 of the gas-liquid separator 40. The refrigerant passages 22, 23 communicate the interior of the gas-liquid separator 40 with the outside via the top portion 41 of the gas-liquid separator 40. The end portion of the refrigerant passage 34 is connected to the bottom portion 42 of the gas-liquid separator 40. The refrigerant passage 34 communicates the interior of the gas-liquid separator 40 with the outside via the bottom portion 42 of the gas-liquid separator 40.

The refrigerant at the outlet side of the heat exchanger 14 is in a state of wet vapor, which is a gas-liquid two-phase state in which the saturated liquid and the saturated vapor are mixed together. The refrigerant flowing out of the heat exchanger 14 is supplied through the refrigerant passage 22 to the gas-liquid separator 40. The refrigerant in the gas-liquid two-phase state that flows from the refrigerant passage 22 into the gas-liquid separator 40 is separated into a gas phase and a liquid phase inside the gas-liquid separator 40. The gas-liquid separator 40 separates the refrigerant condensed by the heat exchanger 14 into the refrigerant liquid 43, which is a liquid, and the refrigerant vapor 44, which is a gas, and temporarily accumulates the liquid and gas.

The separated refrigerant liquid 43 flows through the refrigerant passage 34 to the outside of the gas-liquid separator 40. The end portion of the refrigerant passage 34 disposed in the liquid phase inside the gas-liquid separator 40 forms an outlet port from the liquid-phase refrigerant from the gas-liquid separator 40. The separated refrigerant vapor 44 flows out from the refrigerant passage 23 to the outside of the gas-liquid separator 40. The end portion of the refrigerant passage 23 disposed in the gas phase in the gas-liquid separator 40 forms an outlet port from the gas-phase refrigerant from the gas-liquid separator 40. The gas-phase refrigerant vapor 44 guided out of the gas-liquid separator 40 is condensed because the heat thereof is dissipated into the environment and the refrigerant vapor is cooled in the heat exchanger 15 serving as a third heat exchanger.

Inside the gas-liquid separator 40, the refrigerant liquid 43 is accumulated on the lower side and the refrigerant vapor 44 is accumulated on the upper side. The end portion of the refrigerant passage 34 guiding the refrigerant liquid 43 from the gas-liquid separator 40 is connected to the bottom portion 42 of the gas-liquid separator 40. Only the refrigerant liquid 43 is fed out to the outside of the gas-liquid separator 40 from the bottom side of the gas-liquid separator 40 through the refrigerant passage 34. The end portion of the refrigerant passage 23 that guides the refrigerant vapor 44 from the gas-liquid separator 40 is connected to the top portion 41 of the gas-liquid separator 40. Only the refrigerant vapor 44 is fed to the outside of the gas-liquid separator 40 from the top side of the gas-liquid separator 40 through the refrigerant passage 23. As a result, the gas-liquid separator 40 can perform reliably the separation of the gas-phase refrigerant and the liquid-phase refrigerant.

The configuration in which the refrigerant passages 22, 23 are connected to the top portion 41 is not limiting, and for example, the refrigerant passages may be disposed through the top portion 41 or the side portion of the gas-liquid separator 40, and the end portions thereof may be disposed in the refrigerant vapor 44 close to the top portion 41 inside the gas-liquid separator 40. The configuration in which the refrigerant passage 34 is connected to the bottom portion 42 is not limiting, and for example, this refrigerant passage may be disposed through the bottom portion 42, top portion 41, or side portion of the gas-liquid separator 40, and the end portion thereof may be disposed in the refrigerant liquid 43 close to the bottom portion 42 inside the gas-liquid separator 40.

A refrigerant amount measurement unit 70 is attached to the gas-liquid separator 40. The refrigerant amount measurement unit 70 determines the amount of the refrigerant stored inside the gas-liquid separator 40 by measuring the height of a liquid surface 45 constituting the interface of the liquid-phase refrigerant liquid 43 and the gas-phase refrigerant vapor 44 (that is, the distance in the vertical direction from the bottom portion 42 of the gas-liquid separator 40 to the liquid surface 45).

As shown in FIG. 3, the refrigerant amount measurement unit 70 of the embodiment is a float-type level switch disposed inside the gas-liquid separator 40. The refrigerant amount measurement unit 70 has a guide shaft 71 extending from the bottom portion 42 to the top portion 41 of the gas-liquid separator 40 along the vertical direction and a lead switch 72, which is a magnetic drive switch, embedded in the guide shaft 71. The refrigerant amount measurement unit 70 also has an annular float 73 that is disposed around the guide shaft 71 and can move in the extension direction of the guide shaft 71, an annular magnet 74 disposed inside the float 73, and a stopper 75 that controls the movement of the float 73.

Due to the buoyancy of the refrigerant liquid 43 stored inside the gas-liquid separator 40, the float 73 moves in the vertical direction along the guide shaft 71. The annular magnet 74 located inside the float 73 also moves together with the float 73. The lead switch 72 disposed inside the guide shaft 71 is actuated by the magnetic force of the annular magnet 74. More specifically, where the amount of the refrigerant liquid 43 inside the gas-liquid separator 40 decreases, the float 73 and the annular magnet 74 move downward following the descent of the liquid surface 45. Where the annular magnet 74 moves to the height of the lead switch 72, the lead switch 72 is switched ON and the liquid surface 45 is detected to be at a level equal to or lower than the predetermined height.

The refrigerant amount measurement unit 70 detects that the height of the liquid surface 45 has become equal to or less than the predetermined value and that the refrigerant amount inside the gas-liquid separator 40 became equal to or less than the predetermined amount and outputs a corresponding signal L1 (see FIG. 2). The signal L1 is inputted to the control section 80 (see FIG. 2) that controls the cooling system 1. The configuration of the refrigerant amount measurement unit 70 is not limited to the float-type level switch and any conventional liquid level meter or any device capable of measuring the amount of the refrigerant liquid 43 by other parameters, for example, a load cell or the like, may be used.

Returning to FIG. 2, the circulation path through which the refrigerant flows from the outlet of the heat exchanger 14 to the inlet of the expansion valve 16 includes the refrigerant passage 22 leading from the outlet side of the heat exchanger 14 to the gas-liquid separator 40, the refrigerant passage 23 in which the refrigerant vapor 44 flows from the gas-liquid separator 40 and passes through the below-described flow rate adjustment valve 28, the refrigerant passage 24 connected to the inlet side of the heat exchanger 15, and the refrigerant passage 25 through which the refrigerant circulates from the outlet side of the heat exchanger 15 to the expansion valve 16.

The path of the refrigerant circulating between the heat exchanger 14 and the heat exchanger 15 also includes the refrigerant passage 34 communicating the gas-liquid separator 40 with the cooling unit 30 and the refrigerant passage 36 as the second passage communicating the cooling unit 30 with the refrigerant passage 24. The refrigerant liquid 43 circulates from the gas-liquid separator 40 to the cooling unit 30 through the refrigerant passage 34. The refrigerant that has passed through the cooling unit 30 returns to the refrigerant passage 24 through the refrigerant passage 36. The cooling unit 30 is provided in the path of the refrigerant flowing from the heat exchanger 14 to the heat exchanger 15.

A point D shown in FIG. 2 is a connection point of the refrigerant passage 23, the refrigerant passage 24, and the refrigerant passage 36. In other words, the point D shows the end portion on the downstream side (side close to the heat exchanger 15) of the refrigerant passage 23, the end portion on the upstream side (side close to the heat exchanger 14) of the refrigerant passage 24, and the end portion on the downstream side of the refrigerant passage 36. The refrigerant passage 23 forms a portion of the path through which the refrigerant circulates from the gas-liquid separator 40 to the expansion valve 16, namely, the portion from the gas-liquid separator 40 to the point D.

The cooling system 1 includes a refrigerant path disposed in parallel with the refrigerant passage 23, and the cooling unit 30 is provided in this refrigerant path. The cooling unit 30 includes a hybrid vehicle (HV) device 31, which is an electric device installed on the vehicle, and a cooling passage 32 that is a pipe where the refrigerant circulates. The HV device 31 is an example of the heat-generating source. One end of the cooling passage 32 is connected to the refrigerant passage 34. The other end of the cooling passage 32 is connected to the refrigerant passage 36.

The refrigerant path connected in parallel with the refrigerant passage 23 located between the gas-liquid separator 40 and the point D shown in FIG. 2 includes the refrigerant passage 34 on the upstream side (side close to the gas-liquid separator 40) of the cooling unit 30, the cooling passage 32 included in the cooling unit 30, and the refrigerant passage 36 on the downstream side (side close to the heat exchanger 15) of the cooling unit 30. The refrigerant passage 34 is a passage for circulating the liquid-phase refrigerant from the gas-liquid separator 40 to the cooling unit 30. The refrigerant passage 36 is a passage for circulating the refrigerant from the cooling unit 30 to the point D. The point D is a branching point of the refrigerant passages 23, 24 and the refrigerant passage 36.

The refrigerant liquid 43 that has flown out of the gas-liquid separator 40 circulated toward the cooling unit 30 through the refrigerant passage 34. The refrigerant that circulates to the cooling unit 30 and flows through the cooling passage 32 deprives heat of the HV device 31 serving as the heat-generating source to cool the HV device 31. The cooling unit 30 cools the HV device 31 by using the liquid-phase refrigerant separated in the gas-liquid separator 40. The HV device 31 is cooled and the refrigerant is heated by heat exchange between the HV device 31 and the refrigerant circulating in the cooling passage 32 in the cooling unit 30. The refrigerant then passes through the refrigerant passage 36 and circulates from the cooling unit 30 to the point D and then reaches the heat exchanger 15 through the refrigerant passage 24.

The cooling unit 30 is provided to have a structure that enables heat exchange between the HV device 31 and the refrigerant in the cooling passage 32. In the embodiment, the cooling unit 30, for example, has the cooling passage 32 formed such that the outer circumferential surface of the cooling passage 32 is in direct contact with the housing of the HV device 31. The cooling passage 32 has a portion adjacent to the housing of the HV device 31. In this portion, heat exchange is possible between the HV device 31 and the refrigerant circulating in the cooling passage 32.

The HV device 31 is directly connected to and cooled by the outer circumferential surface of the cooling passage 32 that forms part of the refrigerant path leading from the heat exchanger 14 to the heat exchanger 15 of the vapor compression refrigeration cycle. Since the HV device 31 is disposed outside the cooling passage 32, the HV device 31 does not interfere with the flow of the refrigerant circulating inside the cooling passage 32. Therefore, the pressure loss of the vapor compression refrigeration cycle is not increased. As a consequence, the HV device 31 is cooled without significant increase in the power of the compressor 12.

Alternatively, the cooling unit 30 may include any conventional heat pipe disposed to be interposed between the HV device 31 and the cooling passage 32. In this case, the HV device 31 is connected by the heat pipe to the outer circumferential surface of the cooling passage 32 and cooled by heat transfer from the HV device 31 to the cooling passage 32 via the heat pipe. Where the HV device 31 is taken as a heating section of the heat pipe and the cooling passage 32 is taken as a cooling section of the heat pipe, the efficiency of heat transfer between the cooling passage 32 and the HV device 31 is increased. Therefore, the cooling efficiency of the HV device 31 is increased. For example, a wick-type heat pipe can be used.

Since the heat is reliably transferred by the heat pipe from the HV device 31 to the cooling passage 32, the distance between the HV device 31 and the cooling passage 32 may be increased and it is not necessary to use a complex arrangement of the cooling passage 32 to ensure contact of the cooling passage 32 with the HV device 31. As a result, the degree of freedom in arranging the HV device 31 is increased.

The HV device 31 may be an electric device generating heat due to generation and consumption of electric power. The electric device may be, for example, at least one device selected from an inverter for converting DC power into alternating current (AC) power, a motor generator, which is a rotary electric machine, a battery, which is a power accumulating device, a converter for stepping up the battery voltage, and a DC/DC converter for stepping down the battery voltage. The battery is a secondary battery such as a lithium ion battery or a nickel hydride battery. A capacitor may be used instead of the battery.

The heat exchanger 18 is disposed inside a duct 90 for air circulation. The heat exchanger 18 induces heat exchange between the refrigerant and the air-conditioning air that circulates in the duct 90 and adjusts the temperature of the air-conditioning air. The duct 90 has a duct inlet 91 that is an inlet port through which the air-conditioning air flows into the duct 90 and a duct outlet 92 that is an outlet port through which the air-conditioning air flows out of the duct 90. A fan 93 is disposed close to the duct inlet 91 inside the duct 90.

Where the fan 93 is driven, the air circulates inside the duct 90. When the fan 93 operates, the air-conditioning air flows into the duct 90 through the duct inlet 91. The air flowing into the duct 90 may be the external air or the air from the vehicle cabin. An arrow 95 in FIG. 2 shows the flow of the air-conditioning air that circulates through the heat exchanger 18 and undergoes heat exchange with the refrigerant of the vapor compression refrigeration cycle. During air conditioning inside the cabin, the air-conditioning air is cooled in the heat exchanger 18, and the refrigerant is heated by receiving heat transfer from the air-conditioning air. An arrow 96 shows the flow of the air-conditioning air that has a temperature adjusted by the heat exchanger 18 and flows out of the duct 90 through the duct outlet 92.

The refrigerant circulates in the vapor compression refrigeration cycle through the refrigerant circulation flow channel in which the compressor 12, the heat exchangers 14, 15, the expansion valve 16, and the heat exchanger 18 are successively connected by the refrigerant passages 21 to 27. The refrigerant flows in the vapor compression refrigeration cycle so as to pass successively through point A, point B, point C, point D, point E, and point F shown in FIG. 2, and the refrigerant circulates to the compressor 12, heat exchangers 14, 15, the expansion valve 16, and the heat exchanger 18.

FIG. 4 is a Mollier diagram illustrating the state of the refrigerant in the vapor compression refrigeration cycle of the first embodiment. The abscissa in FIG. 4 indicates specific enthalpy (unit: kJ/kg) of the refrigerant and the ordinate indicates absolute pressure (unit: MPa) of the refrigerant. The lines in the figure are the saturated vapor line and the saturated liquid line of the refrigerant. FIG. 4 illustrates the thermodynamic state of the refrigerant at each point (that is, points A, B, C, D, E, and F) of the vapor compression refrigeration cycle in which the refrigerant flows from the refrigerant passage 22 of the outlet of the heat exchanger 14 to the refrigerant passage 34 through the gas-liquid separator 40, cools the HV device 31, and returns from the refrigerant passage 36 to the refrigerant passage 24 of the inlet of the heat exchanger 15 through the point D.

As shown in FIG. 4, the refrigerant (point A) in a superheated vapor state that has been sucked into the compressor 12 is adiabatically compressed along the isenthalpic line in the compressor 12. The pressure and temperature of the refrigerant rise in the course of compression, high-temperature and high-pressure superheated vapor is obtained with a high degree of superheating (point B), and the refrigerant flows into the heat exchanger 14. The gas-phase refrigerant discharged from the compressor 12 is cooled by heat dissipation to the environment in the heat exchanger 14 and condensed (liquefied). The temperature of the refrigerant drops and the refrigerant is liquefied due to heat exchange in the heat exchanger 14. The high-pressure refrigerant vapor that has entered the heat exchanger 14 is isobarically converted by the heat exchanger 14 from the superheated vapor into saturated vapor, the latent heat of condensation is released, and the refrigerant is gradually liquefied to become wet vapor in the gas-liquid mixed state. The condensed part of the refrigerant in the gas-liquid two-phase state is in a state of saturated liquid (point C).

The refrigerant is separated into a gas-phase refrigerant and a liquid-phase refrigerant in the gas-liquid separator 40. The liquid-phase refrigerant liquid 43, which is part of the gas-liquid separated refrigerant, flows from the gas-liquid separator 40 through the refrigerant passage 34 to the cooling passage 32 of the cooling unit 30 and cools the HV device 31. The HV device 31 is cooled by heat release in the cooling unit 30 to the liquid refrigerant in a state of saturated liquid that has been condensed when passing through the heat exchanger 14. The refrigerant is heated by heat exchange with the HV device 31 and the degree of dryness of the refrigerant increases. The refrigerant is partially vaporized by receiving the latent heat from the HV device 31. As a result, wet vapor is obtained in which the saturated liquid is mixed with the saturated vapor (point D).

Then, the refrigerant flows into the heat exchanger 15. The wet vapor of the refrigerant is again condensed by cooling via heat exchange with the external air in the heat exchanger 15, and then the entire refrigerant is condensed and saturated liquid is obtained. The sensible heat is then released and supercooled liquid is obtained (point E). The refrigerant then flows into the expansion valve 16 through the refrigerant passage 25. The refrigerant in the supercooled liquid state is throttle-expanded in the expansion valve 16, the temperature and pressure decrease, while the specific enthalpy remains unchanged, and low-temperature and low-pressure wet vapor in a gas-liquid mixed state is obtained (point F).

The refrigerant in a wet vapor state that exited the expansion valve 16 flows through the refrigerant passage 26 into the heat exchanger 18. The refrigerant in the wet vapor state flows into the tube of the heat exchanger 18. When the refrigerant circulates inside the tube of the heat exchanger 18, the heat of the air inside the vehicle cabin is absorbed as latent heat of evaporation via the fins. As a result, the refrigerant is isobarically evaporated. Where the entire refrigerant becomes the dry saturated vapor, the temperature of the refrigerant vapor additionally rises due to sensible heat and superheated vapor is obtained (point A). The refrigerant is then sucked into the compressor 12 through the refrigerant passage 27. The compressor 12 compresses the refrigerant circulating from the heat exchanger 18.

Changes in the state of the refrigerant, namely, compression, condensation, throttle expansion, and evaporation, are continuously repeated according to the above-described cycle. In the explanation of the above-described vapor compression refrigeration cycle, a theoretic refrigeration cycle is explained, but it goes without saying that in the actual vapor compression refrigeration cycle, it is necessary to take into account the loss in the compressor 12 and the pressure loss and thermal loss of the refrigerant.

In the operation of the vapor compression refrigeration cycle, when the refrigerant is evaporated in the heat exchanger 18 operating as an evaporator, the refrigerant absorbs heat of evaporation from the air in the vehicle cabin, thereby cooling the inside of the cabin. In addition, the high-pressure liquid refrigerant that has flown out of the heat exchanger 14 and has been subjected to gas-liquid separation in the gas-liquid separator 40, circulates to the cooling unit 30 and participates in heat exchange with the HV device 31, thereby cooling the HV device 31. The cooling system 1 cools the HV device 31, which is the heat-generating source installed on the vehicle, by using the vapor compression refrigeration cycle for air conditioning inside the vehicle cabin. The temperature to cool the HV device 31 is desirably lower at least than an upper limit value of a temperature range that is a target for the temperature range of the HV device 31.

Since the HV device 31 is cooled by using the vapor compression refrigeration cycle provided for cooling the portion which is to be cooled in the heat exchanger 18, it is not necessary to provide a special device such as a water circulation pump or a cooling fan for cooling the HV device 31. Therefore, the number of components necessary for the cooling system 1 for the HV device 31 is reduced and the system configuration is simplified. Therefore, the production cost of the cooling system 1 is reduced. In addition, it is not necessary to operate a power source such as a pump or a cooling fan for cooling the HV device 31 and no power is required to operate the power source. Therefore, it is possible to reduce power consumption on cooling the HV device 31.

It suffices that the heat exchanger 14 cools the refrigerant to the wet vapor state, the refrigerant in the gas-liquid mixed state is separated by the gas-liquid separator 40, and only the refrigerant liquid 43 in the saturated liquid state is supplied to the cooling unit 30. The refrigerant in the state of wet vapor obtained by partial evaporation due to intake of the latent heat of evaporation from the HV device 31 is again cooled in the heat exchanger 15. The state of the refrigerant changes at a constant temperature till the refrigerant in the wet vapor state is condensed and completely converted into the saturated liquid. The heat exchanger 15 further cools the liquid-phase refrigerant to a supercooling degree necessary to cool the inside of the vehicle cabin. Since it is not necessary to excessively increase the supercooling degree of the refrigerant, it is possible to reduce the capacity of the heat exchangers 14, 15. Therefore, air conditioning capacity for the vehicle cabin is secured and the heat exchangers 14, 15 are reduced in size, thereby making it possible to obtain the cooling system 1 of reduced size that is useful for vehicles.

The refrigerant passage 23 forming part of the refrigerant path from the outlet of the heat exchanger 14 to the inlet of the expansion valve 16 is provided between the heat exchanger 14 and the heat exchanger 15. The refrigerant passage 23, which is a path that does not pass through the cooling unit 30, and the refrigerant passages 34, 36 and the cooling passage 32, which constitute a path of the refrigerant that passes through the cooling unit 30 and cools the HV device 31, are provided in parallel as a path for refrigerant circulation from the gas-liquid separator 40 to the expansion valve 16. The cooling system of the HV device 31 that includes the refrigerant passages 34, 36 is connected in parallel with the refrigerant passage 23. Therefore, only part of the refrigerant flowing out of the heat exchanger 14 flows to the cooling unit 30. The refrigerant in an amount necessary to cool the HV device 31 is circulated to the cooling unit 30 and the HV device 31 is adequately cooled. Therefore, overcooling of the HV device 31 is prevented.

Where the path of the refrigerant flowing directly from the heat exchanger 14 to the heat exchanger 15 and the path of the refrigerant flowing from the heat exchanger 14 to the heat exchanger 15 via the cooling unit 30 are provided in parallel and only part of the refrigerant is circulated into the refrigerant passages 34, 36, the pressure loss occurring when the refrigerant flows in the cooling system of the HV device 31 is reduced. Since the entire refrigerant does not flow into the cooling unit 30, the pressure loss relating to the refrigerant circulation via the cooling unit 30 is reduced. Accordingly, it is possible to reduce the power necessary to drive the compressor 12 for circulating the refrigerant.

Where the low-temperature and low-pressure refrigerant that has passed through the expansion valve 16 is used to cool the HV device 31, the capacity of the heat exchanger 18 to cool the air in the vehicle cabin decreases and the cooling capacity inside the vehicle cabin is decreased. By contrast, in the cooling system 1 of the embodiment, the high-pressure refrigerant discharged from the compressor 12 is condensed by both the heat exchanger 14 serving as the first condenser and the heat exchanger 15 serving as the second condenser in the vapor compression refrigeration cycle. The two-stage heat exchangers 14, 15 are disposed between the compressor 12 and the expansion valve 16, and the cooling unit 30 that cools the HV device 31 is provided between the heat exchanger 14 and the heat exchanger 15. The heat exchanger 15 is provided in the path of the refrigerant circulating from the cooling unit 30 toward the expansion valve 16:

Since the refrigerant heated by the HV device 31 is sufficiently cooled in the heat exchanger 15, the refrigerant has a temperature and pressure that are required to cool the interior of vehicle cabin, at the outlet of the expansion valve 16. Therefore, the amount of heat received from the outside when the refrigerant evaporates in the heat exchanger 18 is sufficiently large. By determining the heat radiation capacity of the heat exchanger 15 so as to be able to sufficiently cool the refrigerant in this way, it is possible to cool the HV device 31, without adversely affecting the capacity to cool the air inside the vehicle cabin. Therefore, both the capacity to cool the HV device 31 and the cooling capacity inside the vehicle cabin are reliably secured.

When the refrigerant flowing from the heat exchanger 14 to the cooling unit 30 cools the HV device 31, the refrigerant is heated by the heat taken from the HV device 31. If the refrigerant is heated to a temperature equal to or higher than the saturated vapor temperature in the cooling unit 30 and the entire amount of the refrigerant is evaporated, the amount of heat exchange between the refrigerant and the HV device 31 decreases, the HV device 31 cannot be cooled efficiently, and a pressure loss occurring when the refrigerant flows inside the pipes increases. Therefore, it is desirable that the refrigerant be sufficiently cooled in the heat exchanger 14 to a degree such that the entire amount of the refrigerant is not vaporized after cooling the HV device 31.

More specifically, the state of the refrigerant at the outlet of the heat exchanger 14 is brought close to that of saturated liquid. Typically, the refrigerant is brought to a state on the saturated liquid line at the outlet of the heat exchanger 14. Since the heat exchanger 14 can sufficiently cool the refrigerant, the heat radiation capacity of the heat exchanger 14, which is the capacity to remove heat from the refrigerant, becomes higher than the heat radiation capacity of the heat exchanger 15. By sufficiently cooling the refrigerant in the heat exchanger 14 with a relatively high heat radiation capacity, it is possible to retain in a wet vapor state the refrigerant that has received heat from the HV device 31 and avoid the reduction in the heat exchange amount between the refrigerant and the HV device 31. Therefore, the HV device 31 is sufficiently cooled with good efficiency. The refrigerant in a wet vapor state after cooling the HV device 31 is again cooled with good efficiency in the heat exchanger 15 and cooled to a state of supercooled liquid with a temperature below the saturation temperature. Therefore, it is possible to provide the cooling system 1 in which both the capacity to cool the vehicle cabin and the capacity to cool the HV device 31 are secured.

The refrigerant that is in the gas-liquid two-phase state at the outlet of the heat exchanger 14 is separated into a gas phase and a liquid phase in the gas-liquid separator 40. The gas-phase refrigerant separated in the gas-liquid separator 40 circulates via the refrigerant passages 23, 24 and is directly supplied to the heat exchanger 15. The liquid-phase refrigerant separated in the gas-liquid separator 40 circulates through the refrigerant passage 34 and is supplied to the cooling unit 30 to cool the HV device 31. This liquid-phase refrigerant is in a true saturated liquid state without deficiency or excess. By taking only the liquid-phase refrigerant from the gas-liquid separator 40 and causing this refrigerant to flow into the cooling unit 30, it is possible to cool the HV device 31 by making the maximum use of the capacity of the heat exchanger 14. Therefore, the cooling system 1 with increased capacity to cool the HV device 31 is provided.

By introducing the refrigerant that is in a saturated liquid state at the outlet of the gas-liquid separator 40 into the cooling passage 32 that cools the HV device 31, it is possible to minimize the amount of refrigerant in the gas phase in the refrigerant flowing in the cooling system of the HV device 31 that includes the refrigerant passages 34, 36 and the cooling passage 32. Therefore, the increase in flow speed of the refrigerant vapor flowing in the cooling system of the HV device 31 and the increase in pressure loss is suppressed and it is possible to reduce power consumption of the compressor 12 for circulating the refrigerant. Therefore, it is possible to avoid performance degradation of the vapor compression refrigeration cycle.

As shown in FIG. 3, the refrigerant liquid 43 in a saturated liquid state is accumulated inside the gas-liquid separator 40. The gas-liquid separator 40 functions as a liquid accumulator that temporarily accumulates the refrigerant liquid 43, which is a liquid refrigerant, inside thereof. By storing a predetermined amount of the refrigerant liquid 43 inside the gas-liquid separator 40, it is possible to maintain the flow rate of the refrigerant flowing from the gas-liquid separator 40 into the cooling unit 30 even when the load changes. Since the gas-liquid separator 40 has a liquid reservoir function, becomes a buffer against load changes, and can absorb load changes, the cooling performance of the HV device 31 is stabilized.

Returning back to FIG. 2, the cooling system 1 includes the flow rate adjustment valve 28. The flow rate adjustment valve 28 is disposed in the refrigerant passage 23 that forms one of the refrigerant paths from the heat exchanger 14 to the expansion valve 16, those paths being connected in parallel. The flow rate adjustment valve 28 is used to adjust to any values the flow rate of the refrigerant flowing in the refrigerant passage 23 and the flow rate of the refrigerant flowing in the cooling system of the HV device 31 including the cooling passage 32 by changing the pressure loss of the refrigerant flowing in the refrigerant passage 23 by changing the opening degree of the flow rate adjustment valve 28.

For example, where the flow rate adjustment valve 28 is fully closed and the valve opening degree is 0%, the entire amount of the refrigerant from the heat exchanger 14 flows from the gas-liquid separator 40 into the refrigerant passage 34. Where the opening degree of the flow rate adjustment valve 28 is increased, the flow rate of part of the refrigerant flowing from the heat exchanger 14 to the refrigerant passage 22 that directly flows into the heat exchanger 15 through the refrigerant passage 23 increases and the flow rate of part of the refrigerant flowing from the heat exchanger 14 to the refrigerant passage 22 that flows to the cooling passage 32 through the refrigerant passage 34 and cools the HV device 31 decreases. Where the opening degree of the flow rate adjustment valve 28 is decreased, the flow rate of part of the refrigerant flowing from the heat exchanger 14 to the refrigerant passage 22 that directly flows into the heat exchanger 15 through the refrigerant passage 23 decreases and the flow rate of part of the refrigerant flowing from the heat exchanger 14 to the refrigerant passage 22 that flows through the cooling passage 32 and cools the HV device 31 increases.

Where the opening degree of the flow rate adjustment valve 28 is increased, the flow rate of the refrigerant cooling the HV device 31 decreases and the capacity to cool the HV device 31 decreases. Where the opening degree of the flow rate adjustment valve 28 is decreased, the flow rate of the refrigerant cooling the HV device 31 increases and the capacity to cool the HV device 31 increases. Since it is possible to optimally adjust the amount of refrigerant flowing to the HV device 31 by using the flow rate adjustment valve 28, it is possible to reliably prevent overcooling of the HV device 31. In addition, it is possible to reliably reduce the pressure loss due to the circulation of the refrigerant in the cooling system of the HV device 31 and the power consumed in the compressor 12 on the refrigerant circulation.

The cooling system 1 further includes a connection passage 51. The connection passage 51 communicates the refrigerant passage 21, through which the refrigerant flows between the compressor 12 and the heat exchanger 14, with the refrigerant passage 36 on the downstream side with respect to the cooling unit 30, from among the refrigerant passages 34, 36 in which the refrigerant circulates to the cooling unit 30. A switching valve 52 that switches the communication state of the connection passage 51 and the refrigerant passages 21, 36 is provided in each of the refrigerant passage 36 and the connection passage 51. Where the switching valve 52 is opened or closed, the circulation of the refrigerant through the connection passage 51 is enabled or disabled. The refrigerant passage 36 is divided into a refrigerant passage 36a on the upstream side of the branching point from the connection passage 51 and a refrigerant passage 36b on the downstream side of the branching point from the connection passage 51.

By switching the refrigerant path by using the switching valve 52, it is possible to select at will a path for the refrigerant that has cooled the HV device 31 either to the heat exchanger 15 through the refrigerant passages 36b, 24 or to the heat exchanger 14 through the connection passage 51 and the refrigerant passage 21 and cause the refrigerant to circulate into the selected path.

More specifically, two valves 57, 58 are provided as the switching valves 52. In the cooling operation of the vapor compression refrigeration cycle, the valve 57 is fully open (valve opening degree 100%) and the valve 58 is fully closed (valve opening degree 0%), and the opening degree of the flow rate adjustment valve 28 is adjusted such that a sufficient amount of the refrigerant flows to the cooling unit 30. As a result, the refrigerant that circulates in the refrigerant passage 36a after cooling the HV device 31 is reliably caused to circulate to the heat exchanger 15 through the refrigerant passage 36b. Meanwhile, when the vapor compression refrigeration cycle is stopped, the valve 58 is fully open, the valve 57 is fully closed, and the flow rate adjustment valve 28 is fully closed. As a result, the refrigerant circulating in the refrigerant passage 36a after cooling the HV device 31 is circulated to the heat exchanger 14 through the connection passage 51 and a circular path is formed in which the refrigerant is circulated between the cooling unit 30 and the heat exchanger 14.

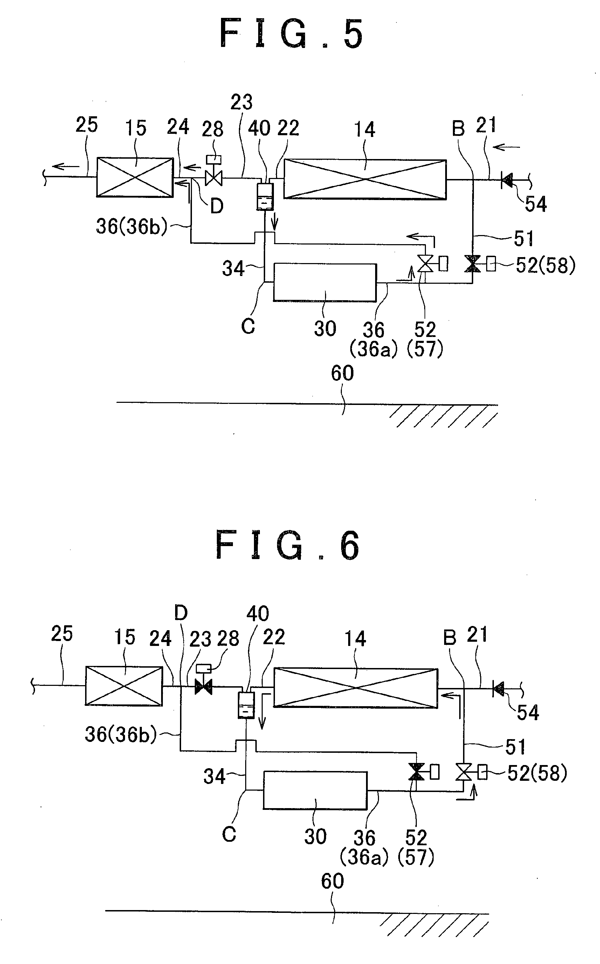

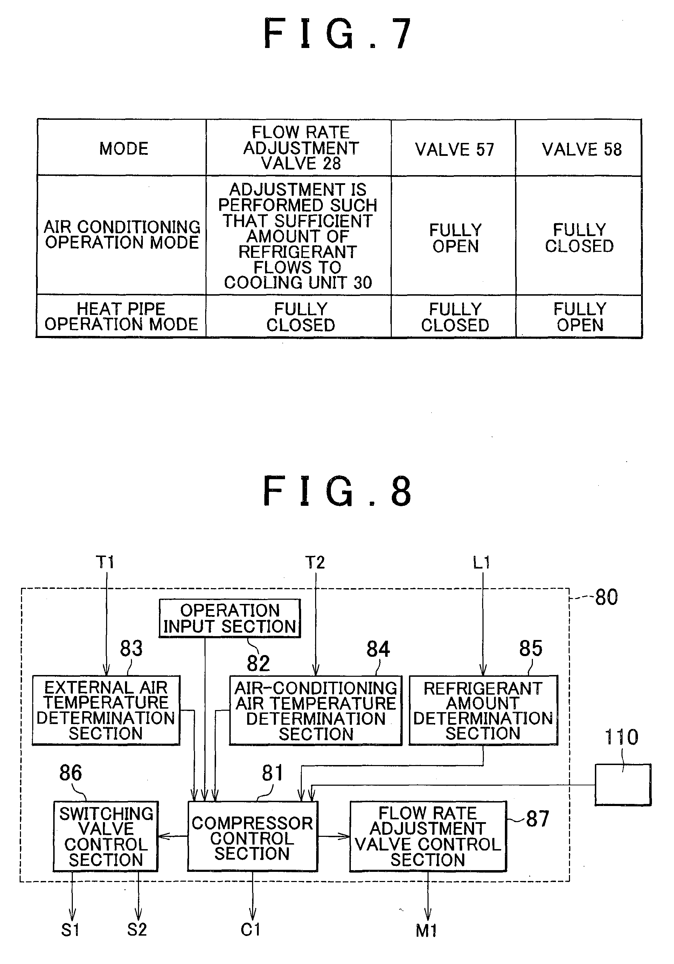

FIG. 5 is a schematic diagram illustrating the flow of the refrigerant that cools the HV device 31 realized when the vapor compression refrigeration cycle is operated. FIG. 6 is a schematic diagram illustrating the flow of the refrigerant that cools the HV device 31 when the vapor compression refrigeration cycle is stopped. FIG. 7 shows the opening degrees of the flow rate adjustment valve 28 and the switching valves 52 (valves 57, 58) in each operation mode of the cooling system 1. Of the operation modes shown in FIG. 7, the "air conditioner operation mode" relates to the case where the vapor compression refrigeration cycle shown in FIG. 5 is operated, that is, the case where the compressor 12 is operated and the refrigerant is circulated in the entire vapor compression refrigeration cycle. Meanwhile, the "heat pipe operation mode" relates to the case where the vapor compression refrigeration cycle shown in FIG. 6 is stopped, that is, the case where the compressor 12 is stopped and the refrigerant is circulated through the circular path connecting the cooling unit 30 and the heat exchanger 14.

As shown in FIGS. 5 and 7, in the "air conditioner operation mode" in which the compressor 12 is driven and the vapor compression refrigeration cycle operates, the opening degree of the flow rate adjustment valve 28 is adjusted such that a sufficient amount of the refrigerant flows to the cooling unit 30. The switching valve 52 is operated so that the refrigerant is circulated from the cooling unit 30 to the expansion valve 16 through the heat exchanger 15. Thus, where the valve 57 is fully open and the valve 58 is fully closed, the refrigerant path is selected such that the refrigerant flows in the entire cooling system 1. Therefore, the cooling capacity of the vapor compression refrigeration cycle is secured and it is possible to efficiently cool the HV device 31.

As shown in FIGS. 6 and 7, in the "heat pipe operation mode" in which the compressor 12 is stopped and the vapor compression refrigeration cycle is stopped, the switching valve 52 is operated so that the refrigerant is circulated from the cooling unit 30 to the heat exchanger 14. Thus, where the valve 57 is fully closed, the valve 58 is fully open, and the flow rate adjustment valve 28 is fully closed, the refrigerant circulates through the connection passage 51, without flowing to the refrigerant passage 36b. As a result, a closed circular path is formed in which the refrigerant flows from the heat exchanger 14 through the refrigerant passage 22 and the refrigerant passage 34 in this order, reaches the cooling unit 30, and then returns to the heat exchanger 14 through the refrigerant passage 36a, connection passage 51, and refrigerant passage 21 in this order.

The refrigerant is circulated through such a circular path between the heat exchanger 14 and the cooling unit 30, without operating the compressor 12. When the refrigerant cools the HV device 31, the refrigerant is evaporated by receiving the latent heat of evaporation from the HV device 31. The refrigerant vapor vaporized by heat exchange with the HV device 31 flows to the heat exchanger 14 through the refrigerant passage 36a, connection passage 51, and refrigerant passage 21 in this order. In the heat exchanger 14, the refrigerant vapor is cooled and condensed by travel draft of the vehicle or draft from the radiator fan for cooling the engine. The refrigerant liquid that has been liquefied in the heat exchanger 14 returns to the cooling unit 30 through the refrigerant passages 22, 34.

Thus, a heat pipe in which the HV device 31 is a heating portion and the heat exchanger 14 is a cooling portion is formed by the circular path passing through the cooling unit 30 and the heat exchanger 14. Therefore, when the vapor compression refrigeration cycle is stopped, that is, when cooling of the vehicle cabin is stopped, the HV device 31 is reliably cooled without the necessity to start the compressor 12. Since it is not necessary to operate the compressor 12 at all times in order to cool the HV device 31, it is possible to reduce power consumption of the compressor 12 and it is possible to improve fuel economy of the vehicle. Furthermore, it is possible to extend the service life of the compressor 12 and therefore it is possible to increase the reliability of the compressor 12.

In FIGS. 5 and 6, a ground surface 60 is shown. The cooling unit 30 is disposed below the heat exchanger 14 in the vertical direction perpendicular to the ground surface 60. In the circular path in which the refrigerant is circulated between the heat exchanger 14 and the cooling unit 30, the cooling unit 30 is disposed at a lower level and the heat exchanger 14 is disposed at a higher level. The heat exchanger 14 is disposed at a position higher than the cooling unit 30.

In this case, the refrigerant vapor obtained by heating and evaporation in the cooling unit 30 rises inside the circular path and reaches the heat exchanger 14. The refrigerant vapor is then cooled in the heat exchanger 14 and condensed into the liquid refrigerant, which flows down inside the circular path under gravity and returns to the cooling unit 30. In other words, a heat pipe of a thermo-siphon type is formed by the cooling unit 30, heat exchanger 14, and the refrigerant path connecting them. By forming the heat pipe, it is possible to increase the heat transfer efficiency from the HV device 31 to the heat exchanger 14. Therefore, even when the vapor compression refrigeration cycle is stopped, the HV device 31 is cooled with higher efficiency, without significantly increased power. In the invention, examples of the mode of arranging the piping so that the refrigerant that is condensed by the first heat exchanger (the heat exchanger 14 in this embodiment) is caused to flow into the cooling unit by gravitational force include a mode, in which the portion of the piping between the first heat exchanger and the cooling unit is horizontal or inclined downward toward the cooling unit, a mode, in which the portion of the piping between the first heat exchanger and the cooling unit is inclined downward toward the cooling unit, and a mode, in which a liquid storage device (the gas-liquid separator 40 in this embodiment) is provided in the portion of the piping between the first heat exchanger and the cooling unit that is arranged as described above. Among others, it is preferable that the portion of the piping between the first heat exchanger and the cooling unit be inclined downward toward the cooling unit, regardless of whether the liquid storage device is provided. Note that the scope of the arrangement, in which the piping is inclined downward, includes the arrangement, in which the piping is directed vertically downward.

A pair of the above-described valves 57, 58 may be used as the switching valves 52 that switch the communication state of the connection passage 51 and the refrigerant passages 21, 36. Alternatively, a three-way valve disposed in a branching point between the refrigerant passage 36 and the connection passage 51 may be used. In either case, it is possible to cool the HV device 31 with good efficiency both when the vapor compression refrigeration cycle operates and when the cycle is stopped. The valves 57, 58 may have a simple structure, provided that they can open and close the refrigerant passage, and are therefore inexpensive. Where two valves 57, 58 are used, a less expensive cooling system 1 is provided. Meanwhile, the space required for installing the three-way valve is less than that necessary for disposing the two valves 57, 58. Therefore, where the three-way valve is used, it is possible to provide the cooling system 1 that is smaller in size and advantageous for installation on a vehicle.

The cooling system 1 further includes a check valve 54. The check valve 54 is disposed closer to the compressor 12 than to the connection site of the refrigerant passage 21 and the connection passage 51 in the refrigerant passage 21 between the compressor 12 and the heat exchanger 14. The check valve 54 allows the refrigerant to flow in the direction from the compressor 12 to the heat exchanger 14 and prevents the refrigerant from flowing in the opposite direction. With this configuration, it is possible to reliably form a closed-loop refrigerant path in which the refrigerant is circulated between the heat exchanger 14 and the cooling unit 30 in the heat pipe operation mode shown in FIG. 6.

Where the check valve 54 is not present, the refrigerant can flow from the connection passage 51 to the refrigerant passage 21 on the compressor 12 side. By providing the check valve 54, it is possible to reliably prohibit the flow of the refrigerant from the connection passage 51 toward the compressor 12 side. Therefore, the decrease in capacity to cool the HV device 31 when the vapor compression refrigeration cycle using a heat pipe formed by the circular refrigerant path is stopped is prevented. Therefore, the HV device 31 is efficiently cooled even when cooling of the vehicle cabin is stopped.

Further, where the amount of the refrigerant in the close-loop refrigerant path is insufficient when the vapor compression refrigeration cycle is stopped, the refrigerant is supplied to the closed-loop path through the check valve 54 by operating the compressor 12 for a short period of time. As a result, the amount of the refrigerant in the closed loop is increased and the heat exchange processing amount of the heat pipe is increased. Therefore, the amount of the refrigerant in the heat pipe is secured. As a result, it is possible to avoid insufficient cooling of the HV device 31 caused by the insufficient amount of the refrigerant.

The control of the cooling system 1 in the embodiment will be explained below. The control section 80 serving as a control device that is shown in FIG. 2 and controls the cooling system 1 receives a signal L1 indicating the measured value of refrigerant amount from the refrigerant amount measurement unit 70 that measures the amount of the refrigerant liquid 43 in the gas-liquid separator 40. The control section 80 also receives a signal T1 indicating the measured value of the external temperature from the external air temperature measurement unit 61 that measures the temperature of the external air in the vicinity of the cooling system 1. The control section 80 also receives a signal T2 indicating the measured value of the temperature of air-conditioning air from an air-conditioning air temperature measurement unit 62 that measures the temperature of the air-conditioning air circulating in the duct 90, the temperature being adjusted by heat exchange in the heat exchanger 18.

The control section 80 outputs a signal C1 instructing to start or stop the compressor 12, a signal M1 indicating the opening degree of the flow rate adjustment valve 28, and signals S1, S2 instructing to open or close the switching valves 52 (valves 57, 58). The control section 80 is connected by a cable 111 to an engine control unit 110 that controls the engine 100 (see FIG. 1). The engine control unit 110 outputs a signal E 1 indicating the operation state of the engine 100 to the engine 100.

FIG. 8 is a block diagram illustrating in detail a configuration of the control section 80. The control section 80 of the first embodiment includes a compressor control section 81 that starts and stops the compressor 12 and an operation input section 82 that receives an operation from the outside. The control section 80 further includes an external air temperature determination section 83 that determines whether the temperature of the external air measured by the external air temperature measurement unit 61 is higher or lower than a predetermined temperature, an air-conditioning air temperature determination section 84 that determines whether the temperature of the air-conditioning air measured by the air-conditioning air temperature measurement unit 62 is higher or lower than a predetermined temperature, and a refrigerant amount determination section 85 that determines whether the amount of the refrigerant inside the gas-liquid separator 40 that is measured by the refrigerant amount measurement unit 70 is larger or smaller than a predetermined amount. The control section 80 further includes a switching valve control section 86 that controls the opening-closing state of the switching valve 52 and a flow rate adjustment valve control section 87 that controls the opening degree of the flow rate adjustment valve 28.

The operation input section 82 is provided at the control panel for air conditioning. The user of the cooling system 1 operates the operation input section 82 and selects an operation mode from the air conditioner operation mode in which the compressor 12 is started and cooling of the heat-generating source is performed and the heat pipe operation mode in which the heat-generating source is cooled in a state in which the compressor 12 is stopped. Information on the operation mode in which the user operates the cooling system 1 is inputted via the operation input section 82 to the control section 80. When the air conditioner operation mode is selected, the operation input section 82 transmits a control command instructing the compressor control section 81 to start the compressor 12. When the heat pipe operation mode is selected, the operation input section 82 transmits a control command that instructs the compressor control section 81 to stop the compressor 12.

The external air temperature determination section 83 receives the signal T1 indicating the measured value of the external air temperature from the external air temperature measurement unit 61, which measures the external air temperature, and determines whether the external air temperature is higher or lower than the predetermined temperature. When the external air temperature is higher than the predetermined temperature (for example, 25°C), the external air temperature determination section 83 transmits a control command instructing the compressor control section 81 to start the compressor 12. When the external air temperature is equal to or lower than the predetermined temperature (for example, 25°C), the external air temperature determination section 83 transmits a control command instructing the compressor control section 81 to stop the compressor 12.

The air-conditioning air temperature determination section 84 receives the signal T2 indicating the measured value of air-conditioning air temperature from the air-conditioning air temperature measurement unit 62, which measures the temperature of the air-conditioning air, and determines whether the temperature of the air-conditioning air is higher or lower than a predetermined temperature. When the air-conditioning air temperature is higher than the predetermined temperature (for example, 20°C), the air-conditioning air temperature determination section 84 transmits a control command instructing the compressor control section 81 to start the compressor 12. When the air-conditioning air temperature is equal to or lower than the predetermined temperature (for example, 20°C), the air-conditioning air temperature determination section 84 transmits a control command instructing the compressor control section 81 to stop the compressor 12.

The refrigerant amount determination section 85 receives the signal L1 indicating the amount of the refrigerant from the refrigerant amount measurement unit 70, which measures the amount of the refrigerant liquid 43 accumulated inside the gas-liquid separator 40, and determines whether the amount of the refrigerant liquid 43 accumulated inside the gas-liquid separator 40 is larger or smaller than a predetermined amount. When the amount of the refrigerant liquid 43 is smaller than the predetermined amount, the refrigerant amount determination section 85 transmits a control command instructing the compressor control section 81 to start the compressor 12. When the amount of the refrigerant liquid 43 is equal to or larger than the predetermined amount, the refrigerant amount determination section 85 transmits a control command instructing the compressor control section 81 to stop the compressor 12.

The compressor control section 81 receives a control command transmitted from the operation input section 82, the external air temperature determination section 83, the air-conditioning air temperature determination section 84, or the refrigerant amount determination section 85 and transmits the signal C1 instructing to start or stop the compressor 12 to the compressor 12.

The compressor control section 81 also receives a signal indicating the operation state of the engine 100 from the engine control unit 110, which controls the engine 100, and transmits the signal C1 instructing to start or stop the compressor 12 to the compressor 12 according to the instruction from the engine control unit 110. For example, the amount of heat generated by the HV device 31 can increase depending on the running state of the hybrid vehicle 1000 (see FIG. 1), for example, when the vehicle travels uphill. The capacity of the cooling system 1 to cool the HV device 31 is higher in the air conditioner operation mode in which the compressor 12 is operated than in the heat pipe operation mode. Therefore, when the amount of heat generated by the HV device 31 is large, the HV device 31 is reliably prevented from overheating by operating the cooling system 1 in the air conditioner operation mode to cool the HV device 31.

The engine control unit 110 monitors the temperature of the elements included in the PCU 300, the temperature of the board of the PCU 300, the electric current supplied to the PCU 300, and the torque value of the motor generator included in the drive unit 200. By using these values, it is possible to increase the prediction accuracy of operation mode of the cooling system 1. By transmitting from the engine control unit 110 a control command instructing the compressor control section 81 to start or stop the compressor 12, it is possible to operate the cooling system 1 at a lower level of power consumption.

In response to the start or stop of the compressor 12, a control command instructing the switching valve control section 86 to perform opening/closing switching of the switching valve 52 and a control command instructing the flow rate adjustment valve control section 87 to change the opening degree of the flow rate adjustment valve 28 are transmitted from the compressor control section 81. More specifically, as has been explained with reference to FIG. 7, when the compressor 12 is started to cool the heat-generating source in the air conditioning operation mode, the opening degree of the flow rate adjustment valve 28 is adjusted so that a sufficient amount of the refrigerant flows to the cooling unit 30, the valve 57 is fully open, and the valve 58 is fully closed. Meanwhile, when the compressor 12 is stopped, the valve 57 is fully closed, the valve 58 is fully open, and the flow rate adjustment valve 28 is fully closed.

The switching valve control section 86 transmits to the switching valves 52 (valves 57, 58) signals S1, S2 that instruct the respective switching valves 52 to open or closed. The flow rate adjustment valve control section 87 transmits to the flow rate adjustment valve 28 a signal M1 that indicates the opening degree of the flow rate adjustment valve 28.

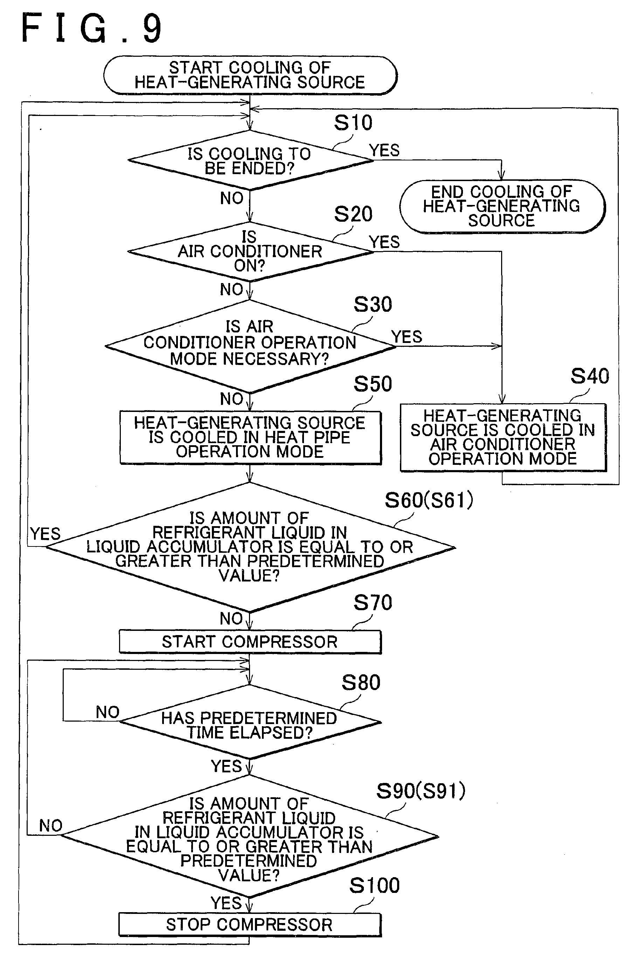

FIG. 9 is a flowchart illustrating an example of a control method for the cooling system 1. As shown in FIG. 9, where the cooling of the HV device 31, which is a heat-generating source, is started by using the cooling system 1, first, it is determined in step (S10) whether or not the cooling of the heat-generating source is to be ended. Where the cooling is determined not to be ended, it is determined in the next step (S20) whether or not the air conditioner has been set ON by operating the control panel for air conditioning.

Where it is determined in step (S20) that the air conditioner is OFF, then, in step (S30), it is determined whether the cooling of the heat-generating source in the air conditioner operation mode is necessary. Where a control command instructing the start of the compressor 12 is transmitted to the compressor control section 81 from the engine control unit 110, the external air temperature determination section 83 or the air-conditioning air temperature determination section 84, it is determined that the cooling of the heat-generating source in the air conditioner operation mode is necessary, and the compressor control section 81 transmits the signal C1 instructing the start of the compressor 12, to the compressor 12.

Where it is determined in step (S20) that the air conditioner is ON, it means that the compressor 12 has been started to circulate the refrigerant in the entire vapor compression refrigeration cycle. Therefore, then, in step (S40), the cooling system 1 cools the heat-generating source in the air conditioner operation mode. Thus, the valve 57 is fully open, the valve 58 is fully closed, and the opening degree of the flow rate adjustment valve 28 is adjusted, thereby circulating the refrigerant in an amount sufficient to cool the HV device 31 to the cooling unit 30. As a result, the refrigerant that has been cooled by heat exchange with the external air in the heat exchanger 14 is circulated to the cooling unit 30 and the HV device 31 is cooled by heat exchange between the HV device 31 and the refrigerant flowing in the cooling passage 32.

In the case where it is determined in step (S30) that the cooling of the heat-generating source in the air conditioner operation mode is necessary, the processing further advances to step (S40), the compressor 12 is started, and the cooling of the heat-generating source in the air conditioner operation mode is started.

After step (S40), the processing returns to step (S10), and when the cooling is not determined in step (S10) to be ended and where it is determined in step (S20) that the air conditioner is ON or it is determined in step (S30) that the cooling in the air conditioner operation mode is necessary, the cooling of the heat-generating source in the air conditioner operation mode is continued.

When it is determined in step (S30) that the cooling of the heat-generating source in the air conditioner operation mode is not necessary, then, in step (S50), the cooling system 1 cools the heat-generating source in the heat pipe operation mode. Thus, the valve 57 is fully closed, the valve 58 is fully opened, and the flow rate adjustment valve 28 is then fully closed, thereby forming a circular path for circulating the refrigerant between the cooling unit 30 and the heat exchanger 14. As a result, a heat pipe of a thermo-siphon type is formed, the refrigerant in a liquid phase that has been cooled in the heat exchanger 14 is circulated under gravity to the cooling unit 30, and the HV device 31 is cooled by heat exchange between the HV device 31 and the refrigerant flowing in the cooling passage 32. The refrigerant vapor evaporated by heating in the cooling unit 30 rises inside the circular path and reaches again the heat exchanger 14.

The processing then advances to step (S60), and it is determined whether or not the operation of the compressor 12 is necessary. In the embodiment, in step (S60), it is determined by the refrigerant amount determination section 85 whether the amount of the refrigerant liquid 43 that has been stored in the gas-liquid separator 40 functioning as a liquid accumulator is equal to or greater than a predetermined value (step (S61)).

In the case where it is determined in step (S61) that the amount of the refrigerant liquid 43 in the gas-liquid separator 40 is equal to or higher than the predetermined value, the processing returns to step (S10). When the cooling is not determined in step (S10) to be ended and where it is determined in step (S20) that the air conditioner is OFF and it is determined in step (S30) that the air conditioner operation mode is not necessary, the cooling of the heat-generating source in the heat pipe operation mode is continued.

In the case where it is determined in step (S61) that the amount of the refrigerant liquid 43 in the gas-liquid separator 40 is less than the predetermined value, the compressor 12 is then started in step (S70). The state in which the amount of the refrigerant liquid 43 in the gas-liquid separator 40 has decreased and became less than the predetermined value is determined to be a state in which the amount of the refrigerant circulating in the closed-loop refrigerant path forming the heat pipe of the thermo-siphon type is insufficient. Accordingly, in such a case, the compressor 12 is started and the refrigerant is additionally supplied to the closed-loop path via the check valve 54 shown in FIG. 6, thereby increasing the amount of the refrigerant inside the closed loop. As a result, the sufficient amount of the refrigerant circulating in the heat pipe is secured and it is possible to avoid the event in which the capacity to cool the HV device 31 decreases and cooling becomes insufficient due to the insufficient amount of the refrigerant.

After the compressor 12 has been started, it is determined in step (S80) whether a predetermined time (for example, 10 sec) has elapsed. In other words, the operation of the compressor 12 is continued for a predetermined time. Where it is determined that the predetermined time has elapsed, then it is determined again in step (S90) whether or not the operation of the compressor 12 is necessary. In the embodiment, it is determined again in step (S90) by the refrigerant amount determination section 85 whether the amount of the refrigerant liquid 43 stored in the gas-liquid separator 40 is equal to or greater than the predetermined value (step (S91)).

When the amount of the refrigerant liquid 43 in the gas-liquid separator 40 is determined in step (S91) to be less than the predetermined value, the processing returns to step (S80) and the operation of the compressor 12 is continued for a predetermined time. Where it is determined in step (S91) that the amount of the refrigerant liquid 43 in the gas-liquid separator 40 is equal to or greater than the predetermined amount, the compressor 12 is then stopped in step (S100), and the processing returns to step (S 10).

Where the cooling of the heat-generating source is determined in step (S10) to be ended, the supply of the refrigerant to the cooling unit 30 is stopped and the cooling of the HV device 31 is stopped.

As described hereinabove, with the cooling system 1 of the embodiment, the HV device 31, which is a heat-generating source, is cooled in both operation modes, that is, in the "air conditioner operation mode" in which the compressor 12 is driven and the "heat pipe operation mode" in which the compressor 12 is stopped. In the heat pipe operation mode, the HV device 31 is reliably cooled without starting the compressor 12, and the compressor 12 is not required to be operated at all times to cool the HV device 31. Therefore, it is possible to reduce power consumption by the compressor 12 and it is possible to improve fuel economy of the vehicle. In addition, since the service life of the compressor 12 is extended, the reliability of the compressor 12 is increased.

The user can switch the operation modes of the cooling system 1 by manual input via the operation input section 82. When air conditioning is not required, the user can reliably prevent the unnecessary operation of the compressor 12 by operating the operation input section 82 and selecting the heat pipe operation mode to cool the heat-generating source.

The operation mode of the cooling system 1 is automatically switched when necessary on the basis of the measured values obtained by measuring the temperature of the external air or the temperature of the air-conditioning air. The operation mode of the cooling system 1 is also automatically switched according to an instruction from the engine control unit 110 that is based on the measured values of vehicle control parameters for controlling the operation state of the engine 100, which have been measured by the presently installed sensors. Since the operation mode of the cooling system 1 is switched to maintain the heat-generating source in an adequately cooled state and the heat-generating source is cooled in the air conditioner operation mode only when necessary, the start of the compressor 12 is reliably inhibited.

When the heat-generating source is cooled in the heat pipe operation mode, whether or not the amount of the refrigerant circulating in the heat pipe is adequate is detected by measuring the amount of the refrigerant liquid 43 in the gas-liquid separator 40. When it is determined that the amount of the refrigerant circulating in the heat pipe is insufficient, the compressor is started and the amount of the refrigerant is increased. Therefore, the heat-generating source is cooled more reliably. In addition, since the start/stop of the compressor 12 is controlled on the basis of the refrigerant amount inside the gas-liquid separator 40, the cooling system 1 is controlled more reliably so that the compressor 12 is operated only when necessary.

By controlling the open/closed state of the switching valve 52 together with starting or stopping the compressor 12 for switching the operation mode of the cooling system 1, it is possible to switch the air conditioner operation mode and heat pipe operation mode more reliably and cause the refrigerant to circulate in the adequate path in each operation mode.

### (Second Embodiment)

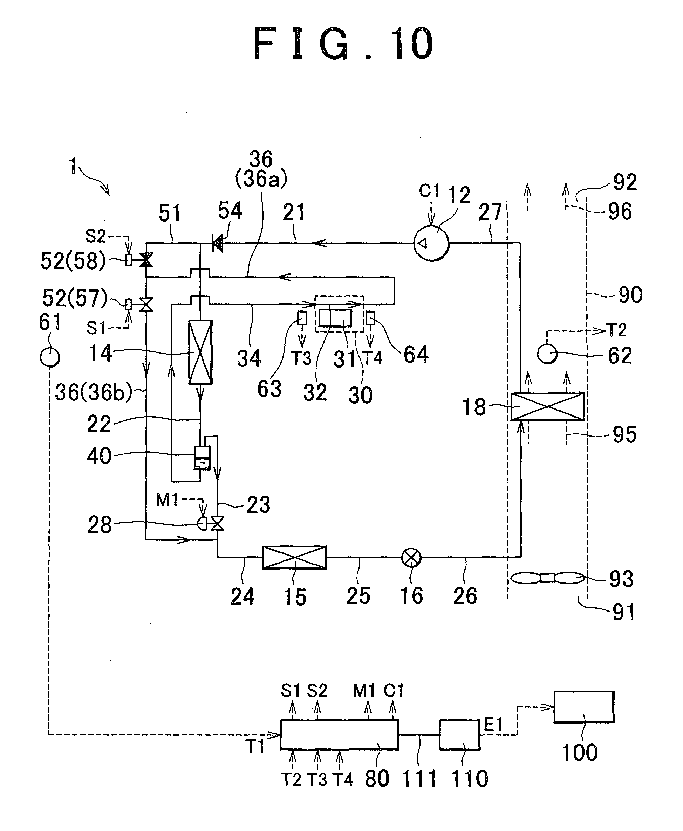

FIG. 10 is a schematic diagram illustrating the configuration of the cooling system 1 of a second embodiment. Comparing FIG. 2 with FIG. 10, the difference between the cooling system 1 of the second embodiment and that of the first embodiment is that the former includes a cooling unit inlet temperature measurement unit 63, which measures the temperature of the refrigerant flowing into the cooling unit 30, and a cooling unit outlet temperature measurement unit 64, which measures the temperature of the refrigerant flowing out of the cooling unit 30, instead of the refrigerant amount measurement unit 70, which measures the refrigerant amount inside the gas-liquid separator 40. The control section 80 receives a signal T3 indicating the measured value of the temperature of the refrigerant flowing into the cooling unit 30 from the cooling unit inlet temperature measurement unit 63 and a signal T4 indicating the measured value of the temperature of the refrigerant flowing out of the cooling unit 30 from the cooling unit outlet temperature measurement unit 64.

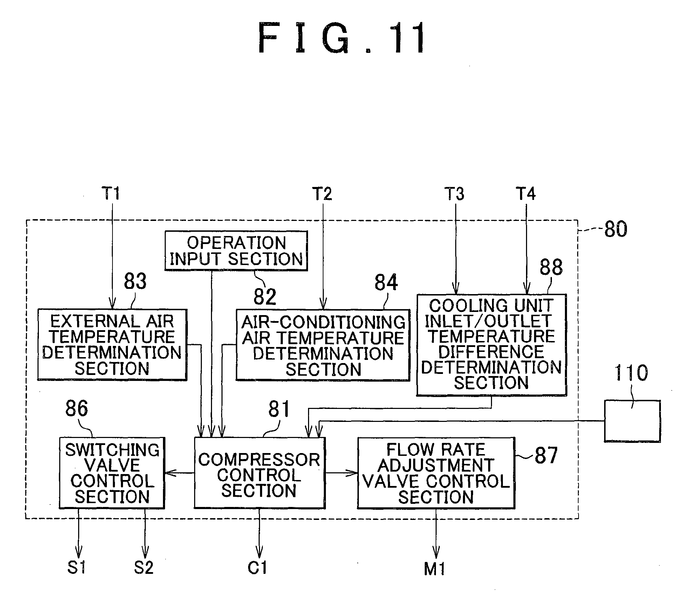

FIG. 11 is a block diagram illustrating in detail a configuration of the control section 80 of the second embodiment. The control section 80 of the second embodiment includes a cooling unit inlet/outlet temperature difference determination section 88 instead of the refrigerant amount determination section 85 of the first embodiment. The cooling unit inlet/outlet temperature difference determination section 88 determines whether the difference between the temperature of the refrigerant flowing into the cooling unit 30 and the temperature of the refrigerant flowing out of the cooling unit 30 is higher or lower than a predetermined value.

The cooling unit inlet/outlet temperature difference determination section 88 receives the signal T3 from the cooling unit inlet temperature measurement unit 63, receives the signal T4 from the cooling unit outlet temperature measurement unit 64, and calculates the difference between the temperature of the refrigerant in the outlet of the cooling unit 30 and the temperature of the refrigerant in the inlet of the cooling unit 30 on the basis of the received signals. The cooling unit inlet/outlet temperature difference determination section 88 also determines whether the aforementioned difference in temperature is higher or lower than a predetermined temperature. When the difference in temperature exceeds the predetermined temperature, the cooling unit inlet/outlet temperature difference determination section 88 transmits a control command instructing the compressor control section 81 to start the compressor 12.

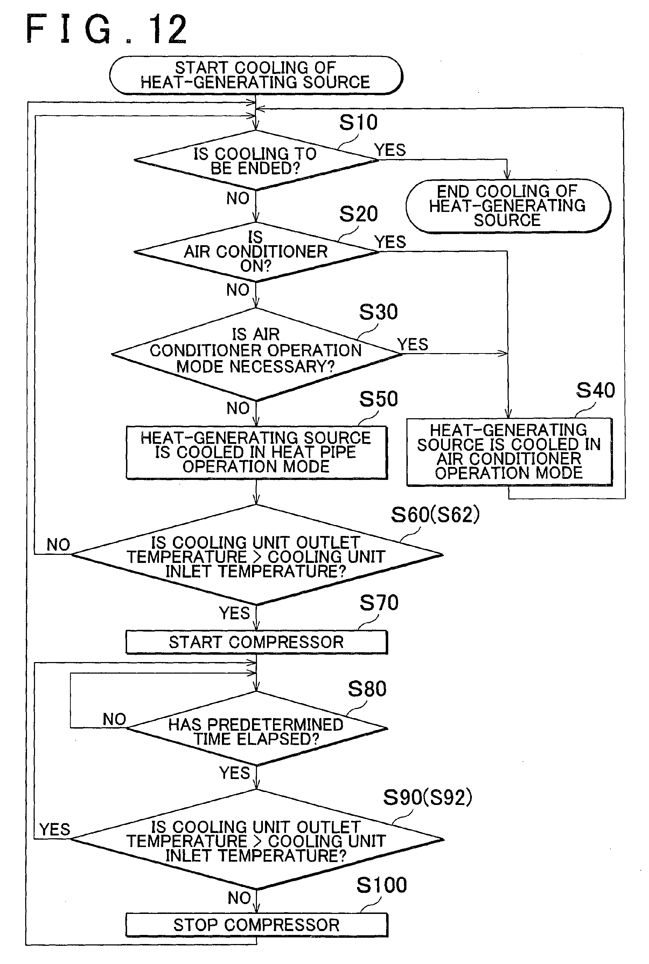

FIG. 12 is a flowchart illustrating a method for controlling the cooling system 1 of the second embodiment. As shown in FIG. 12, in the second embodiment, in step (S60) of determining whether or not the operation of the compressor 12 is necessary, the cooling unit inlet/outlet temperature difference determination section 88 determines whether or not the difference between the temperature of the refrigerant flowing into the cooling unit 30 and the temperature of the refrigerant flowing out of the cooling unit 30 is greater than the predetermined value and whether or not the temperature of the refrigerant at the cooling unit outlet typically exceeds the temperature of the refrigerant at the cooling unit inlet (step (S62)).

When it is determined in step (S62) that the temperature of the refrigerant at the cooling unit outlet is equal to or lower than the temperature of the refrigerant at the cooling unit inlet, the processing returns to step (S10). When it is determined in step (S62) that the temperature of the refrigerant at the cooling unit outlet is higher than the temperature of the refrigerant at the cooling unit inlet, the compressor 12 is then started in step (S70).

The state in which the temperature of the refrigerant at the cooling unit outlet is higher than the temperature of the refrigerant at the cooling unit inlet is determined to be a state in which the amount of the refrigerant in the closed loop forming the heat pipe of a thermo-siphon type has reduced, thereby decreasing the capacity to cool the heat-generating source. Accordingly, in such a case, the compressor 12 is started and the amount of the refrigerant in the closed loop is increased. As a result, the sufficient amount of the refrigerant circulating in the heat pipe is secured and it is possible to avoid the event in which the capacity to cool the HV device 31 decreases and cooling becomes insufficient due to the insufficient amount of the refrigerant.

After the compressor 12 has been started, it is determined in step (S80) whether a predetermined time (for example, 10 sec) has elapsed. In other words, the operation of the compressor 12 is continued for a predetermined time. Where it is determined that the predetermined time has elapsed, it is determined again in step (S90) whether or not the operation of the compressor 12 is necessary. In the embodiment, it is determined again in step (S90) by the cooling unit inlet/outlet temperature difference determination section 88 whether the temperature of the refrigerant at the cooling unit outlet is higher than the temperature of the refrigerant at the cooling unit inlet (step (S92)).

When the temperature of the refrigerant at the cooling unit outlet is determined in step (S92) to be higher than the temperature of the refrigerant at the cooling unit inlet, the processing returns to step (S80) and the operation of the compressor 12 is continued for a predetermined time. Where it is determined in step (S92) that the temperature of the refrigerant at the cooling unit outlet is equal to or lower than the temperature of the refrigerant at the cooling unit inlet, the compressor 12 is then stopped in step (S100), and the processing returns to step (S10).

As described hereinabove, with the cooling system 1 of the second embodiment, when the heat-generating source is cooled in the heat pipe operation mode, whether or not the amount of the refrigerant circulating in the heat pipe is adequate is detected by measuring the temperature of the refrigerant flowing into the cooling unit 30 and the temperature of the refrigerant flowing out of the cooling unit 30 and determining the difference between those two temperatures. When it is determined that the amount of the refrigerant circulating in the heat pipe is insufficient, the compressor is started and the amount of the refrigerant is increased. Therefore, the heat-generating source is cooled more reliably. In addition, since the start/stop of the compressor 12 is controlled on the basis of the difference in refrigerant temperature between the inlet and outlet of the cooling unit 30, the cooling system 1 is controlled more reliably, so that the compressor 12 is operated only when necessary.

Further, in the above-described embodiments, the cooling system 1 is explained that cools the HV device 31 as an example of an electric device installed on a vehicle. However, the electric device to which the invention is applied is not limited to the exemplified electric device, such an inverter and a motor generator, and may be any electric device, provided that the electric device generates heat at least upon actuation. When there are a plurality of electric devices that are the objects of cooling, it is preferred that the electric devices have a common temperature range that is the target of cooling. The temperature range that is the target of cooling is a temperature range adequate as a temperature environment for actuating the electric devices.

Further, the heat-generating source that is to be cooled by the cooling system 1 in accordance with the invention is not limited to the electric device installed on a vehicle and may be any device generating heat or a heat-generating part of any device.

While embodiments of the invention have been explained above, configurations of the embodiments may be combined as appropriate. Further, the embodiments disclosed herein should be construed as merely exemplary in all of the aspects thereof and not limiting. The scope of the invention is represented by the claims, rather than by the explanation presented hereinabove, and it is intended to include all of the changes within the scope and meanings equivalent to those of the claims.

The cooling system in accordance with the invention is particularly advantageously applicable to cooling of electric devices by using a vapor compression refrigeration cycle for cooling inside a cabin in a vehicle, such as a hybrid vehicle, fuel cell vehicle, and electric automobile, that carries an electric device such as a motor generator and an inverter.

## Claims

1. A cooling system comprising:
a compressor (12) for circulating a refrigerant;
a first heat exchanger (14) that performs heat exchange between the refrigerant and external air;
a decompressor (16) that decompresses the refrigerant;
a second heat exchanger (18) that performs heat exchange between the refrigerant and air for air conditioning;
piping (21) that connects the compressor, the first heat exchanger, the decompressor, the second heat exchanger, and the compressor in this order and that allows the refrigerant to flow so as to circulate therethrough;
a cooling unit (30) cooling a heat-generating source (31) by using the refrigerant, **characterized in that** said cooling unit (30) is provided in a portion of the piping between the first heat exchanger (14) and the decompressor (16); and that said cooling system further comprises
a connection passage (51) that communicates a first passage (21) with a second passage (36), the first passage (21) being a portion of the piping between the compressor (12) and the first heat exchanger (14), the second passage (36) being a portion of the piping between the cooling unit (30) and the decompressor (16), wherein, in a mounted state, the first heat exchanger (14) is positioned higher than the cooling unit (30), and
the piping is arranged so that the refrigerant that is condensed by the first heat exchanger (14) is caused to flow into the cooling unit (30) by gravitational force.

2. The cooling system according to claim 1, further comprising
a liquid storage device (40) that is provided in a portion of the piping between the first heat exchanger (14) and the cooling unit (30) and stores the refrigerant that is in a liquid state, the liquid storage device (40) being positioned higher than the cooling unit (30).

3. The cooling system according to claim 1, further comprising
a control section (80) that controls the cooling system (1), the control section including a compressor control section (81) that controls start and stop of the compressor, wherein
the compressor control section (81) is configured to start and stop the compressor according to an external input.

4. The cooling system according to claim 3, further comprising
an operation input section (82) that receives an operation from outside, wherein
the compressor control section (81) is configured to start and stop the compressor according to a command from the operation input section.

5. The cooling system according to claim 3 or 4, further comprising
an external air temperature measurement (61) unit that measures a temperature of the external air, wherein
the compressor control section (81) is configured to start and stop the compressor on the basis of the temperature measured by the external air temperature measurement unit (61).

6. The cooling system according to any one of claims 3 to 5, further comprising
an air-conditioning air temperature measurement unit (62) that measures a temperature of the air for air conditioning, wherein
the compressor control section (81) is configured to start and stop the compressor on the basis of the temperature measured by the air-conditioning air temperature measurement unit (62).

7. The cooling system according to any one of claims 3 to 6, further comprising:
a liquid storage device (40) that is provided in a portion of the piping between the first heat exchanger (14) and the cooling unit (30) and stores the refrigerant that is in a liquid state, the liquid storage device (40) being positioned higher than the cooling unit (30); and
a refrigerant amount measurement unit (70) that measures an amount of the refrigerant stored inside the liquid storage device (40), wherein
the compressor control section (81) is configured to start and stop the compressor on the basis of the amount of the refrigerant measured by the refrigerant amount measurement unit (70).

8. The cooling system according to any one of claims 3 to 7, further comprising:
a cooling unit inlet temperature measurement unit (63) that measures a temperature of the refrigerant flowing into the cooling unit (30); and
a cooling unit outlet temperature measurement unit (64) that measures a temperature of the refrigerant flowing out of the cooling unit (30), wherein
the compressor control section (81) is configured to start and stop the compressor on the basis of the temperatures measured by the cooling unit inlet temperature measurement unit (63) and the cooling unit outlet temperature measurement unit (64).

9. The cooling system according to any one of claims 3 to 8, further comprising
a connection passage switching valve (52) that can be opened and closed and is provided in the connection passage (51), wherein
the control section (80) further includes a switching valve control section (86) that is configured to control an open-closed state of the connection passage switching valve, and
the switching valve control section (86) is configured to set the connection passage switching valve (52) to a closed state or open state according to a command for causing the compressor control section (81) to start or stop the compressor.

10. The cooling system according to claim 9, further comprising
a second passage switching valve (57) that can be opened and closed and is provided in the second passage (36) on a side closer to the decompressor (16) with respect to a connection between the connection passage (51) and the second passage (36), wherein
the switching valve control section (86) is further configured to control an open-closed state of the second passage switching valve (57), and
the switching valve control section (86) is configured to set the second passage switching valve (57) to a closed state or open state according to a command for causing the compressor control section to start or stop the compressor.

11. The cooling system according to any one of claims 3 to 8, further comprising
a three-way valve that is provided at a connection between the connection passage (51) and the second passage (36), wherein
the control section further includes a switching valve control section that is configured to control a state of the three-way valve, and
the switching valve control section is configured to set the three-way valve to a first state or a second state according to a command for causing the compressor control section (81) to start or stop the compressor, the first state being a state, in which a portion of the second passage (36) on a side closer to the cooling unit (30) with respect to the connection and a portion of the second passage (36) on a side closer to the decompressor (16) with respect to the connection are communicated with each other, the second state being a state, in which the portion of the second passage (36) on the side closer to the cooling (30) unit with respect to the connection and the connection passage (51)are communicated with each other.

12. A vehicle **characterized by** comprising:
the cooling system according to any one of claims 3 to 11;
an engine (100); and
an engine control unit (110) that controls the engine, wherein
the compressor control unit (81) is configured to start and stop the compressor according to a command from the engine control unit.

## Patentansprüche

1. Kühlsystem mit:
einem Kompressor (12); um ein Kühlmittel (12) umlaufen zu lassen;
einem ersten Wärmetauscher (14), der einen Wärmeaustausch zwischen dem Kühlmittel und Außenluft durchführt;
einem Dekompressor (16), der das Kühlmittel entspannt;
einem zweiten Wärmetauscher (18), der einen Wärmeaustausch zwischen dem Kühlmittel und Luft für die Klimatisierung durchführt;
einer Verrohrung (21), die den Kompressor, den ersten Wärmetauscher, den Dekompressor, den zweiten Wärmetauscher und den Kompressor in dieser Reihenfolge verbindet und die es dem Kühlmittel erlaubt, so zu fließen, dass es durch sie umläuft;
einer Kühleinheit (30), die eine Wärme erzeugende Quelle (31) unter Verwendung des Kühlmittels kühlt, **dadurch gekennzeichnet, dass** die Kühleinheit (30) in einem Abschnitt der Verrohrung zwischen dem ersten Wärmetauscher (14) und dem Dekompressor (16) vorgesehen ist; und dass das Kühlsystem weiterhin Folgendes umfasst:
einen Verbindungsdurchlass (51), der einen ersten Durchlass (21) mit einem zweiten Durchlass (36) verbindet, wobei der erste Durchlass (21) ein Teil der Verrohrung zwischen dem Kompressor (12) und dem ersten Wärmetauscher (14) ist, der zweite Durchlass (36) ein Abschnitt der Verrohrung zwischen der Kühleinheit (30) und dem Dekompressor (16) ist, wobei in einem montierten Zustand
der erste Wärmetauscher (14) höher als die Kühleinheit (30) angeordnet ist und die Verrohrung so angeordnet ist, dass das Kühlmittel, das vom ersten Wärmetauscher (14) kondensiert wird, durch Schwerkraft dazu veranlasst wird, in die Kühleinheit (30) zu fließen.

2. Kühlsystem nach Anspruch 1, weiter mit
einer Flüssigkeitsspeichereinrichtung (40), die in einem Abschnitt der Verrohrung zwischen dem ersten Wärmetauscher (14) und der Kühleinheit (30) vorgesehen ist und das Kühlmittel speichert, das sich in einem flüssigen Zustand befindet, wobei die Flüssigkeitsspeichereinrichtung (40) höher als die Kühleinheit (30) angeordnet ist.

3. Kühlsystem nach Anspruch 1, weiter mit
einem Steuerabschnitt (80), der das Kühlsystem (1) steuert, wobei der Steuerabschnitt einen Kompressorsteuerabschnitt (81) umfasst, der den Start und Stopp des Kompressors steuert, wobei
der Kompressorsteuerabschnitt (81) dazu aufgebaut ist, den Start und Stopp des Kompressors passend zu einer externen Eingabe zu steuern.

4. Kühlsystem nach Anspruch 3, weiter mit
einem Betätigungseingabeabschnitt (82), der eine Betätigung von außen empfängt, wobei
der Kompressorsteuerabschnitt (81) dazu aufgebaut ist, den Kompressor passend zu einem Befehl von dem Betätigungseingabeabschnitt zu starten und zu stoppen.

5. Kühlsystem nach Anspruch 3 oder 4, weiter mit
einer Außenlufttemperaturmesseinheit (61), die eine Temperatur der Außenluft misst, wobei
der Kompressorsteuerabschnitt (81) dazu aufgebaut ist, den Kompressor auf der Grundlage der Temperatur zu starten und zu stoppen, die von der Außenlufttemperaturmesseinheit (61) gemessen wird.

6. Kühlsystem nach einem der Ansprüche 3 bis 5, weiter mit
einer Klimatisierungslufttemperaturmesseinheit (62), die eine Temperatur der Luft für die Klimatisierung misst, wobei
der Kompressorsteuerabschnitt (81) dazu aufgebaut ist, den Kompressor auf der Grundlage der Temperatur zu starten und zu stoppen, die von der Klimatisierungslufttemperaturmesseinheit (62) gemessen wird.

7. Kühlsystem nach einem der Ansprüche 3 bis 6, weiter mit:
einer Flüssigkeitsspeichereinrichtung (40), die in einem Abschnitt der Verrohrung (21) zwischen dem ersten Wärmetauscher (14) und der Kühleinheit (30) vorgesehen ist und das Kühlmittel speichert, das sich in einem flüssigen Zustand befindet, wobei die Flüssigkeitsspeichereinrichtung (40) höher als die Kühleinheit (30) positioniert ist; und
einer Kühlmittelmengenmesseinheit (70), die eine Menge des in der Flüssigkeitsspeichereinrichtung (40) gespeicherten Kühlmittels misst, wobei
der Kompressorsteuerabschnitt (81) dazu aufgebaut ist, den Kompressor auf der Grundlage der von der Kühlmittelmengenmesseinheit (70) gemessenen Menge des Kühlmittels zu starten und zu stoppen.

8. Kühlsystem nach einem der Ansprüche 3 bis 7, weiter mit:
einer Kühleinheitseinlasstemperaturmesseinheit (63), die eine Temperatur des in die Kühleinheit (30) fließenden Kühlmittels misst; und
einer Kühleinheitsauslasstemperaturmesseinheit (64), die eine Temperatur des aus der Kühleinheit (30) fließenden Kühlmittels misst, wobei
der Kompressorsteuerabschnitt (81) dazu aufgebaut ist, den Kompressor auf der Grundlage der Temperaturen zu starten und zu stoppen, die von der Kühleinheitseinlasstemperaturmesseinheit (63) und der Kühleinheitsauslasstemperaturmesseinheit (64) gemessen werden.

9. Kühlsystem nach einem der Ansprüche 3 bis 8, weiter mit:
einem Verbindungsdurchlassumschaltventil (52), das zu öffnen und zu schließen ist und in den Verbindungsdurchlass (51) vorgesehen ist, wobei
der Steuerabschnitt (80) weiterhin einen Umschaltventilsteuerabschnitt (86) umfasst, der dazu aufgebaut ist, einen geöffneten/geschlossenen Zustand des Verbindungsdurchlassumschaltventils zu steuern, und
der Umschaltventilsteuerabschnitt (86) dazu aufgebaut ist, das Verbindungsdurchlassumschaltventil (52) passend zu einem Befehl, der den Kompressorsteuerabschnitt (81) dazu veranlasst, den Kompressor zu starten oder zu stoppen, in einen geöffneten oder geschlossenen Zustand zu versetzen.

10. Kühlsystem nach Anspruch 9, weiter mit:
einem zweiten Durchlassumschaltventil (57), das zu öffnen und zu schließen ist und in dem zweiten Durchlass (36) auf einer Seite näher am Dekompressor (16) als eine Verbindung zwischen dem Verbindungsdurchlass (51) und dem zweiten Durchlass (36) vorgesehen ist, wobei
der Umschaltventilsteuerabschnitt (86) weiterhin dazu aufgebaut ist, einen geöffneten/geschlossenen Zustand des zweiten Durchlassumschaltventils (57) zu steuern, und
der Umschaltventilsteuerabschnitt (86) dazu aufgebaut ist, das zweite Durchlassumschaltventil (57) passend zu einem Befehl, um den Kompressorsteuerabschnitt dazu zu veranlassen, den Kompressor zu starten oder zu stoppen, in einen geöffneten oder geschlossenen Zustand zu versetzen.

11. Kühlsystem nach einem der Ansprüche 3 bis 8, weiter mit:
einem Drei-Wege-Ventil, das an einer Verbindung zwischen dem Verbindungsdurchlass (51) und dem zweiten Durchlass (36) vorgesehen ist, wobei
der Steuerabschnitt weiterhin einen Umschaltventilsteuerabschnitt umfasst, der dazu aufgebaut ist, einen Zustand des Drei-Wege-Ventils zu steuern, und
der Umschaltventilsteuerabschnitt dazu aufgebaut ist, das Drei-Wege-Ventil passend zu einem Befehl, um den Kompressorsteuerabschnitt (81) dazu zu veranlassen, den Kompressor zu starten oder zu stoppen, in einen ersten Zustand oder einen zweiten Zustand zu versetzen, wobei der erste Zustand ein Zustand ist, in dem ein Abschnitt des zweiten Durchlasses (36) auf einer Seite näher bei der Kühleinheit (30) als die Verbindung und ein Abschnitt des zweiten Durchlasses (36) auf einer Seite näher beim Dekompressor (16) als die Verbindung miteinander verbunden sind, während der zweite Zustand ein Zustand ist, in dem der Abschnitt des zweiten Durchlasses (36) auf der Seite näher bei der Kühleinheit (30) als die Verbindung und der Verbindungsdurchlass (51) miteinander verbunden sind.

12. Fahrzeug, **dadurch gekennzeichnet, dass** es Folgendes aufweist:
das Kühlsystem nach einem der Ansprüche 3 bis 11;
eine Maschine (100); und
eine Maschinensteuereinheit (110), welche die Maschine steuert, wobei
die Kompressorsteuereinheit (81) dazu aufgebaut ist, den Kompressor passend zu einem Befehl von der Maschinensteuereinheit zu starten und zu stoppen.

## Revendications

1. Système de refroidissement comprenant :
un compresseur (12) pour faire circuler un réfrigérant ;
un premier échangeur de chaleur (14) qui effectue l'échange de chaleur entre le réfrigérant et l'air extérieur ;
un décompresseur (16) qui décompresse le réfrigérant ;
un second échangeur de chaleur (18) qui effectue l'échange de chaleur entre le réfrigérant et l'air pour la climatisation ;
une tuyauterie (21) qui raccorde le compresseur, le premier échangeur de chaleur, le décompresseur, le second échangeur de chaleur, et le compresseur dans cet ordre et qui permet au réfrigérant de s'écouler afin de circuler à travers ;
une unité de refroidissement (30) refroidissant une source de génération de chaleur (31) en utilisant le réfrigérant, **caractérisé en ce que** ladite unité de refroidissement (30) est pourvue dans une partie de la tuyauterie entre le premier échangeur de chaleur (14) et le décompresseur (16) ;
et **en ce que** ledit système de refroidissement comprend en outre
un passage de raccordement (51) qui fait communiquer un premier passage (21) avec un second passage (36), le premier passage (21) étant une partie de la tuyauterie entre le compresseur (12) et le premier échangeur de chaleur (14), le second passage (36) étant une partie de la tuyauterie entre l'unité de refroidissement (30) et le décompresseur (16), où, dans un état monté,
le premier échangeur de chaleur (14) est positionné plus haut que l'unité de refroidissement (30), et
la tuyauterie est agencée de sorte que le réfrigérant qui est condensé par le premier échangeur de chaleur (14) soit amené à s'écouler dans l'unité de refroidissement (30) par la force gravitationnelle.

2. Système de refroidissement selon la revendication 1, comprenant en outre
un dispositif de stockage de liquide (40) qui est pourvu dans une partie de la tuyauterie entre le premier échangeur de chaleur (14) et l'unité de refroidissement (30) et stocke le réfrigérant qui se trouve dans un état liquide, le dispositif de stockage de liquide (40) étant positionné plus haut que l'unité de refroidissement (30).

3. Système de refroidissement selon la revendication 1, comprenant en outre
une section de commande (80) qui commande le système de refroidissement (1), la section de commande comprenant une section de commande de compresseur (81) qui commande le démarrage et l'arrêt du compresseur, où
la section de commande de compresseur (81) est configurée pour démarrer et arrêter le compresseur en fonction d'une entrée externe.

4. Système de refroidissement selon la revendication 3, comprenant en outre
une section d'entrée d'opération (82) qui reçoit une opération de l'extérieur, où
la section de commande de compresseur (81) est configurée pour démarrer et arrêter le compresseur en fonction d'une commande en provenance de la section d'entrée d'opération.

5. Système de refroidissement selon la revendication 3 ou 4, comprenant en outre
une unité de mesure de température de l'air extérieur (61) qui mesure une température de l'air extérieur, où
la section de commande de compresseur (81) est configurée pour démarrer et arrêter le compresseur sur la base de la température mesurée par l'unité de mesure de température de l'air extérieur (61).

6. Système de refroidissement selon l'une quelconque des revendications 3 à 5, comprenant en outre
une unité de mesure de température de l'air de la climatisation (62) qui mesure une température de l'air pour la climatisation, où
la section de commande de compresseur (81) est configurée pour démarrer et arrêter le compresseur sur la base de la température mesurée par l'unité de mesure de température de l'air de la climatisation (62).

7. Système de refroidissement selon l'une quelconque des revendications 3 à 6, comprenant en outre :
un dispositif de stockage de liquide (40) qui est pourvu dans une partie de la tuyauterie entre le premier échangeur de chaleur (14) et l'unité de refroidissement (30) et stocke le réfrigérant qui se trouve dans un état liquide, le dispositif de stockage de liquide (40) étant positionné plus haut que l'unité de refroidissement (30) ; et
une unité de mesure de quantité de réfrigérant (70) qui mesure une quantité du réfrigérant stocké à l'intérieur du dispositif de stockage de liquide (40), où
la section de commande de compresseur (81) est configurée pour démarrer et arrêter le compresseur sur la base de la quantité du réfrigérant mesurée par l'unité de mesure de quantité de réfrigérant (70).

8. Système de refroidissement selon l'une quelconque des revendications 3 à 7, comprenant en outre :
une unité de mesure de température d'entrée d'unité de refroidissement (63) qui mesure une température du réfrigérant s'écoulant dans l'unité de refroidissement (30) ; et
une unité de mesure de température de sortie d'unité de refroidissement (64) qui mesure une température du réfrigérant s'écoulant hors de l'unité de refroidissement (30), où
la section de commande de compresseur (81) est configurée pour démarrer et arrêter le compresseur sur la base des températures mesurées par l'unité de mesure de température d'entrée d'unité de refroidissement (63) et l'unité de mesure de température de sortie d'unité de refroidissement (64).

9. Système de refroidissement selon l'une quelconque des revendications 3 à 8, comprenant en outre
une valve de commutation de passage de raccordement (52) qui peut être ouverte et fermée et est pourvue dans le passage de raccordement (51), où
la section de commande (80) comprend en outre une section de commande de valve de commutation (86) qui est configurée pour commander un état ouvert-fermé de la valve de commutation de passage de raccordement, et
la section de commande de valve de commutation (86) est configurée pour régler la valve de commutation de passage de raccordement (52) sur un état fermé ou un état ouvert en fonction d'une commande pour amener la section de commande de compresseur (81) à démarrer ou arrêter le compresseur.

10. Système de refroidissement selon la revendication 9, comprenant en outre
une valve de commutation de second passage (57) qui peut être ouverte et fermée et est pourvue dans le second passage (36) sur un côté plus proche du décompresseur (16) par rapport à un raccordement entre le passage de raccordement (51) et le second passage (36), où
la section de commande de valve de commutation (86) est en outre configurée pour commander un état ouvert-fermé de la valve de commutation de second passage (57), et
la section de commande de valve de commutation (86) est configurée pour régler la valve de commutation de second passage (57) sur un état fermé ou un état ouvert en fonction d'une commande pour amener la section de commande de compresseur à démarrer ou arrêter le compresseur.

11. Système de refroidissement selon l'une quelconque des revendications 3 à 8, comprenant en outre
une valve à trois voies qui est pourvue au niveau d'un raccordement entre le passage de raccordement (51) et le second passage (36), où
la section de commande comprend en outre une section de commande de valve de commutation qui est configurée pour commander un état de la valve à trois voies, et
la section de commande de valve de commutation est configurée pour régler la valve à trois voies sur un premier état ou un second état en fonction d'une commande pour amener la section de commande de compresseur (81) à démarrer ou arrêter le compresseur, le premier état étant un état dans lequel une partie du second passage (36) sur un côté plus proche de l'unité de refroidissement (30) par rapport au raccordement et une partie du second passage (36) sur un côté plus proche du décompresseur (16) par rapport au raccordement sont faites communiquer, le second état étant un état dans lequel la partie du second passage (36) sur le côté plus proche de l'unité de refroidissement (30) par rapport au raccordement et le passage de raccordement (51) sont faits communiquer.

12. Véhicule **caractérisé en ce qu'**il comprend :
le système de refroidissement selon l'une quelconque des revendications 3 à 11 ;
un moteur (100) ; et
une unité de commande de moteur (110) qui commande le moteur, où
l'unité de commande de compresseur (81) est configurée pour démarrer et arrêter le compresseur en fonction d'une commande en provenance de l'unité de commande de moteur.
